# EUROPEAN PATENT APPLICATION

(11) **EP 4 439 790 A2**
(43) Date of publication of application: **02.10.2024**
(21) Application number: 24167916.6
(22) Date of filing: 29.03.2024
(51) Int. Cl.: H01M 10/48, H01M 50/176, H01M 50/209, H01M 50/291, H01M 50/298, H01M 50/507, H01M 50/569

(54) **BATTERY MODULE AND ELECTRIC DEVICE**

(30) Priority: 31.03.2023 CN 202310341593
(71) Applicant: Xiamen Ampack Technology Limited, Xiamen City, Fujian Province 361000 (CN)
(72) Inventor: LI, Kunlong, Xiamen City, Fujian Province, People s Republic of China, 361000 (CN); NONG, Wenbin, Xiamen City, Fujian Province, People s Republic of China, 361000 (CN); WANG, Pengfei, Xiamen City, Fujian Province, People s Republic of China, 361000 (CN)
(74) Representative: Icosa

(57) **Abstract**

A battery module (100) includes a collection assembly (20) and a plurality of cell units (10) arranged along a first direction (X). Each cell unit (10) includes a cell (11) and a bracket (12), the cell includes a cell housing (11a) and an electrode terminal (11c). The cell housing (11a) includes a body portion (111) and a first sealing portion (112). The first sealing portion (112) includes a first connection portion (112a). The bracket (12) includes a first portion (121), the first portion (121) covers a part of the first connection portion (112a), the electrode terminal (11c) extends from the first portion (121). The collection assembly (20) includes a wire (21) and a plurality of sampling members (22), the wire (21) is connected to each sampling member (22). At least one bracket (12) includes a second portion (122), the second portion (122) is connected to the first portion (121), at least one electrode terminal (11c) is disposed at the second portion (122), the sampling member (22) is connected to the electrode terminal (11c), the sampling member (22) is fixed to the second portion (122).

## Description

### TECHNICAL FIELD

This application relates to the field of energy storage technologies, and in particular, to a battery module and an electric device.

### BACKGROUND

At present, battery modules are widely used in drones, electric vehicles, intelligent energy storage devices, and other fields. For an existing battery module, information of the battery module is collected through an adapter board, a wire is typically welded to a conductive sheet, and an electrode terminal is connected to the conductive sheet for sampling. This leads to a complicated assembly process and increased costs, and is not conducive to production.

### SUMMARY

In view of this, it is necessary to provide a battery module and an electric device, so as to reduce process steps and save materials.

An embodiment of this application provides a battery module including a collection assembly and a plurality of cell units arranged along a first direction. Each cell unit includes a cell and a bracket. The cell includes an electrode assembly, a cell housing, and an electrode terminal. The electrode terminal is connected to the electrode assembly and extends out of the cell housing. The cell housing includes a body portion and a first sealing portion. The electrode assembly is disposed at the body portion. The first sealing portion includes a first connection portion. The electrode terminal extends out of the cell housing from the first connection portion. The bracket includes a first portion. The first portion covers a part of the first connection portion. The electrode terminal extends from the first portion. The collection assembly includes a wire and a plurality of sampling members. The wire is connected to each sampling member. At least one bracket includes a second portion. The second portion is connected to the first portion. At least one electrode terminal is disposed at the second portion. The sampling member is connected to the electrode terminal. The sampling member is fixed to the second portion. The sampling member being connected to the electrode terminal for sampling can reduce process steps and save materials. The first portion covering the first connection portion improves the toughness of the first connection portion and is conducive to better connection between the sampling member and the electrode terminal. The sampling member being fixed to the second portion facilitates arrangement of the sampling member and can improve the connection strength between the sampling member and the electrode terminal.

Optionally, insome embodiments of this application, the second portion includes a first side surface and a second side surface. The second side surface and the first side surface are opposite to each other along a second direction. The sampling member is connected to the second side surface. The electrode terminal is connected to the first side surface. The electrode terminal is disposed between the sampling member and the first side surface. The second direction is perpendicular to the first direction, facilitating connection of the sampling member.

Optionally, insome embodiments of this application, the second portion and the first portion are arranged along the first direction, and along a direction opposite to the first direction, the second portion extends from the first portion.

Optionally, insome embodiments of this application, a cell assembly includes a first cell unit and a second cell unit adjacent to each other along the first direction. An electrode terminal of the first cell unit and an electrode terminal of the second cell unit are connected in a folding manner. A second portion of the first cell unit faces a second portion of the second cell unit, and the second portion of the second cell unit faces the second portion of the first cell unit, facilitating welding of a first stack portion.

Optionally, insome embodiments of this application, along the first direction, a first space is provided between a bracket of the first cell unit and a bracket of the second cell unit. Along the second direction, a projection of the second portion of the first cell unit is located in a projection of the first space, and a projection of the second portion of the second cell unit is located in the projection of the first space, facilitating the welding of the first stack portion.

Optionally, insome embodiments of this application, the cell assembly includes a third cell unit. The second cell unit and the third cell unit are arranged adjacent to each other along the first direction. A second portion of the third cell unit is away from a first portion of the second cell unit. An electrode terminal of the third cell unit is connected in a folding manner to the electrode terminal of the first cell unit and/or the electrode terminal of the second cell unit, facilitating the welding of the first stack portion.

Optionally, insome embodiments of this application, along the second direction, the electrode terminal of the first cell unit, the electrode terminal of the second cell unit, and the electrode terminal of the third cell unit are stacked to form the first stack portion. Along the second direction, a projection of the first stack portion is located between the projection of the second portion of the second cell unit and a projection of the second portion of the third cell unit, which can reduce the interference of a fourth portion to the first stack portion and facilitate the welding of the first stack portion.

Optionally, insome embodiments of this application, along the second direction, the projection of the first stack portion is located between a projection of the first portion of the second cell unit and a projection of a first portion of the third cell unit, which further facilitates the welding of the first stack portion and reduces influence on the bracket during welding.

Optionally, insome embodiments of this application, along the first direction, a second space is provided between a bracket of the third cell unit and the bracket of the second cell unit. Along the second direction, the projection of the first stack portion is located in a projection of the second space, which can further reduce the interference of the second portion to the first stack portion and further facilitate the welding of the first stack portion.

Optionally, insome embodiments of this application, the cell assembly includes a fourth cell unit. The third cell unit and the fourth cell unit are arranged adjacent to each other along the first direction. The second portion of the third cell unit faces a second portion of the fourth cell unit, and the second portion of the fourth cell unit faces the second portion of the third cell unit, facilitating the welding of the first stack portion.

Optionally, insome embodiments of this application, along the first direction, a third space is provided between the bracket of the third cell unit and a bracket of the fourth cell unit. Along the second direction, the projection of the second portion of the third cell unit is located in a projection of the third space, and a projection of the second portion of the fourth cell unit is located in the projection of the third space, facilitating the welding of the first stack portion.

Optionally, insome embodiments of this application, along the first direction, an electrode terminal of the fourth cell unit and the first stack portion are connected in a folding manner to form an overlap portion. The electrode terminal of the fourth cell unit is disposed between electrode terminals in the first stack portion, or the electrode terminal of the fourth cell unit and the first stack portion are stacked in sequence.

Optionally, insome embodiments of this application, along the second direction, a projection of the overlap portion is located between the projection of the second portion of the second cell unit and the projection of the second portion of the third cell unit, facilitating the welding of the overlap portion.

Optionally, insome embodiments of this application, along the second direction, the projection of the overlap portion is located between the projection of the first portion of the second cell unit and the projection of the first portion of the third cell unit, which further facilitates the welding of the first stack portion and reduces the influence on the bracket during welding.

Optionally, insome embodiments of this application, along the second direction, the projection of the overlap portion is located in the projection of the second space, which can further reduce the interference of the second portion to the overlap portion and further facilitate the welding of the overlap portion.

Optionally, insome embodiments of this application, at least one of the first side surface or the second side surface is provided with a step portion. The step portion includes a first step surface and a second step surface. Along the second direction, a thickness of the first step surface is less than a thickness of the second step surface. Along the second direction, a projection of the electrode terminal overlaps a projection of the first step surface, the projection of the electrode terminal is spaced apart from a projection of the second step surface, and the sampling member is connected to the step portion. This can improve the connection strength between the sampling member and the second portion and reduce the risk of separation of the sampling member from the second portion.

Optionally, insome embodiments of this application, the sampling member includes a first part and a second part. Along the second direction, the first part and the second portion are connected, and the second part is connected to a second portion of any cell unit and an electrode terminal disposed at the second portion.

Optionally, insome embodiments of this application, the first part includes a first section. The second part includes a second section. The first section is bent toward the second section and the first section is connected to the first step surface located on the second side surface, which can improve the connection strength between the first section and the step portion.

Optionally, insome embodiments of this application, the second section is bent toward the first section. The second section is connected to the first step surface located on the first side surface, which can increase a clamping force between the first section and the second section and is conducive to improving the connection strength between the sampling member and the second portion, thereby improving the connection strength between the sampling member and the electrode terminal.

Optionally, insome embodiments of this application, the first part includes a third section. The third section is connected to the first section. The third section is provided with a first bent portion. The step portion is provided with a first limiting portion. The first bent portion is disposed at the first limiting portion. The first bent portion is configured to limit separation of the sampling member from the second portion, which can improve the connection strength between the sampling member and the second portion.

Optionally, insome embodiments of this application, the second part includes a fourth section. The fourth section is connected to the second section. The fourth section is provided with a second bent portion. The second bent portion is disposed at the first limiting portion. The second bent portion is configured to limit separation of the sampling member from the second portion, which can improve the connection strength between the sampling member and the second portion.

Optionally, insome embodiments of this application, the sampling member is sandwiched between the second portion and the electrode terminal, facilitating arrangement of the sampling member.

Optionally, insome embodiments of this application, the sampling member is welded to the electrode terminal, which can improve the connection strength between the sampling member and the electrode terminal.

Optionally, insome embodiments of this application, the body portion includes two first sealing portions. The two first sealing portions are arranged along the second direction. The cell includes two electrode terminals. The sampling member is connected to an electrode terminal extending out of one first sealing portion along the second direction, and the sampling member is connected to an electrode terminal extending out of the other first sealing portion along a direction opposite to the second direction.

Optionally, insome embodiments of this application, the first sealing portion includes a second connection portion and a third connection portion. The bracket includes a first side portion covering the second connection portion and a second side portion covering the third connection portion. The first side portion and the second side portion are arranged along a third direction, improving the protection for the first sealing portion.

Optionally, insome embodiments of this application, when viewed along the first direction, along the second direction, a part of the first connection portion is located between the body portion and the first portion. In the third direction, a part of the first connection portion is located between the first side portion and the second side portion. This can protect a peripheral side of the first connection portion and provide a swelling space for the first sealing portion, thereby reducing the influence of gas production and/or a free electrolyte in the cell on the sealing performance of the first sealing portion, and also achieving heat dissipation of the cell.

Optionally, insome embodiments of this application, body portions of adjacent cells are in contact connection with each other, allowing the body portions to be pressed.

Optionally, insome embodiments of this application, adjacent cell housings exert pressure on each other, so that the plurality of cell units are in a pressed state, conducive to prolonging the service life of the cell unit.

Optionally, insome embodiments of this application, the cell housing includes a first wall, a second wall, a third wall, and a fourth wall. Along the second direction, the second wall is opposite the first wall. Along the first direction, the third wall is opposite the fourth wall. When viewed along the direction opposite to the second direction, in the first direction, the first portion does not exceed the third wall, and the first portion does not exceed the fourth wall. This can reduce the stress on the first sealing portion and improve the protection for the first sealing portion.

Optionally, insome embodiments of this application, the bracket and the cell are integrally formed, which is conducive to improving the connection strength between the bracket and the cell.

Optionally, insome embodiments of this application, the bracket is an insulation bracket, which is conducive to reducing the risk of short circuit between the bracket and the cell.

Optionally, insome embodiments of this application, the body portion includes a fifth wall and a sixth wall. The fifth wall and the sixth wall are disposed along the third direction. The bracket includes a first extension portion. The first extension portion extends from the first side portion. The first extension portion covers the fifth wall and a second sealing portion, so that the body portion and the second sealing portion can be protected, and the connection strength between the bracket and the cell can be improved.

Optionally, insome embodiments of this application, in the third direction, the fifth wall and the second sealing portion are each partially provided with the first extension portion. This can protect a part of the body portion and a part of the second sealing portion, improve the connection strength between the bracket and the cell, and facilitate integral formation of the bracket and the cell.

Optionally, insome embodiments of this application, in the third direction, the fifth wall and the second sealing portion are each entirely provided with the first extension portion. This can better protect the body portion and the second sealing portion and better improve the connection strength between the bracket and the cell.

Optionally, insome embodiments of this application, when viewed along the direction opposite to the second direction, in the first direction, the first side portion does not exceed the first extension portion, and a first gap is formed between adjacent first side portions. The first gap can reduce an acting force on the first side portion, thereby reducing an acting force on the first sealing portion and helping to protect the first sealing portion. The first gap is also conducive to heat dissipation of the cell.

Optionally, insome embodiments of this application, the bracket includes a second extension portion. The second extension portion extends from the second side portion. The second extension portion covers the sixth wall and another second sealing portion, so that the body portion and the another second sealing portion can be protected, and the connection strength between the bracket and the cell can be further improved.

Optionally, insome embodiments of this application, in the third direction, the sixth wall and the another second sealing portion are each partially provided with the second extension portion. This can protect a part of the body portion and a part of the another second sealing portion, improve the connection strength between the bracket and the cell, and facilitate integral formation of the bracket and the cell.

Optionally, insome embodiments of this application, in the third direction, the sixth wall and the another second sealing portion are each entirely provided with the second extension portion. This can better protect the body portion and the second sealing portion and better improve the connection strength between the bracket and the cell.

Optionally, insome embodiments of this application, when viewed along the direction opposite to the second direction, in the first direction, the second side portion does not exceed the second extension portion, and a second gap is formed between adjacent second side portions. The second gap can reduce an acting force on the second side portion, thereby further reducing the acting force on the first sealing portion and further helping to protect the first sealing portion. The second gap is also conducive to heat dissipation of the cell.

Optionally, insome embodiments of this application, an elastic member and a housing are further included, where the elastic member includes a base portion and a folded portion. The base portion is connected to the folded portion. The folded portion is fixed to the housing. The elastic member and the cell assembly are arranged in the first direction. The base portion is configured to be able to apply pressure to the cell unit, and the folded portion is configured to be able to provide a swelling space for the cell unit, so that pressure applied to the cell assembly can be buffered, thereby reducing the influence on the service life of the battery module. The base portion continuously applies pressure to the cell assembly, so that the cell assembly is in a pressed state and maintains dynamic balance, conducive to prolonging the service life of the battery module.

Optionally, insome embodiments of this application, the folded portion includes a first folded portion and a second folded portion. The first folded portion is opposite to the second folded portion along the third direction. The first folded portion and the second folded portion are respectively connected to two opposite sides of the base portion. The first folded portion and the second folded portion can provide a swelling space for the cell assembly.

Optionally, insome embodiments of this application, the elastic member includes a first connection section. The first connection section is connected to a side of the first folded portion away from the base portion. The first connection section is fixed to the housing, so that an acting force on the folded portion is transferred to the housing.

Optionally, insome embodiments of this application, the first connection section is parallel to the base portion, which is conducive to deformation of the elastic member in the first direction.

Optionally, insome embodiments of this application, the first folded portion includes a first folded section and a second folded section. The first folded section is connected to the base portion and the second folded section. The second folded section is connected to the first connection section.

Optionally, insome embodiments of this application, a first included angle A₁ is formed between the first folded section and the base portion. A second included angle B₁ is formed between the second folded section and the first connection section, where A₁ ≥ B₁. This is conducive to improving deformation resistance of the first folded section and reducing the risk of deformation of the elastic member in the first direction.

Optionally, insome embodiments of this application, a third included angle C₁ is formed between the first folded section and the second folded section, where C₁ > A₁. This is conducive to improving uniformity of deformation of the first folded portion.

Optionally, insome embodiments of this application, C₁ = 2A₁ = 2B₁, which is conducive to further improving the uniformity of deformation of the first folded portion.

Optionally, insome embodiments of this application, the housing includes a top wall. The top wall is provided with a first fixed portion. Along the first direction, a projection of the first connection section overlaps a projection of the first fixed portion. The first connection section is fixed to the first fixed portion, so that the acting force on the folded portion can be transferred to the top wall.

Optionally, insome embodiments of this application, the structural strength of the top wall is higher than the structural strength of the elastic member, reducing the risk of deformation of the top wall caused by the acting force on the first folded portion.

Optionally, insome embodiments of this application, the elastic member includes a second connection section. The second connection section is connected to a side of the second folded portion away from the base portion. The second connection section is fixed to the housing, so that the acting force on the folded portion can be transferred to the housing.

Optionally, insome embodiments of this application, the second connection section is parallel to the base portion, which is conducive to deformation of the elastic member in the first direction.

Optionally, insome embodiments of this application, the housing includes a bottom wall. The top wall is opposite the bottom wall along the second direction. The bottom wall is provided with a second fixed portion. Along the first direction, a projection of the second connection section overlaps a projection of the second fixed portion. The second connection section is fixed to the second fixed portion, so that the acting force on the folded portion can be transferred to the bottom wall.

Optionally, insome embodiments of this application, the structural strength of the bottom wall is higher than the structural strength of the elastic member, reducing the risk of deformation of the bottom wall caused by the acting force on the first folded portion.

Optionally, insome embodiments of this application, the first folded portion and the second folded portion are the same in structure, which is conducive to uniformity of stress and deformation.

Optionally, insome embodiments of this application, the battery module includes a first conductive member, where one end of the first conductive member is fixed to the elastic member. The first conductive member includes a buffer part, where the buffer part is configured to be stretched along the first direction by the elastic member when the cell unit swells, and the buffer part can buffer pulling on the first conductive member by the elastic member. This is conducive to the connection strength between the first conductive member and the elastic member.

Optionally, insome embodiments of this application, the first conductive member is connected to the electrode terminal. The first conductive member is configured for electrical energy reception or output of the cell assembly. When the cell assembly swells, the buffer part can alleviate pulling on the electrode terminal, which is conducive to protecting the electrode terminal.

Optionally, insome embodiments of this application, the first conductive member includes a first conductive portion, a second conductive portion, and a third conductive portion. The buffer part is disposed at the first conductive portion. The first conductive portion is connected to the third conductive portion. The second conductive portion is connected to the third conductive portion. The first conductive portion is more prone to folding than the second conductive portion, and the first conductive portion is more prone to stretching when the cell swells, which is conducive to movement of the cell unit.

Optionally, insome embodiments of this application, the third conductive portion is provided with a third fixed portion. The third fixed portion is fixed to a base portion of an elastic member away from a front wall. Along the first direction, a projection of the third fixed portion is spaced apart from a projection of the cell housing, so that the first conductive member can be better stretched along the first direction.

Optionally, insome embodiments of this application, along the first direction, a distance between the buffer part and the elastic member away from the front wall is less than a distance between the buffer part and an elastic member close to the front wall, which is further conducive to stretching the buffer part.

An embodiment of this application further provides an electric device including the battery module according to any one of the foregoing some embodiments.

In the battery module and electric device, the sampling member being connected to the electrode terminal for sampling can reduce process steps and save materials. The first portion covering the first connection portion improves the toughness of the first connection portion and is conducive to better connection between the sampling member and the electrode terminal. The sampling member being fixed to the second portion facilitates arrangement of the sampling member and can improve the connection strength between the sampling member and the electrode terminal.

### BRIEF DESCRIPTION OF DRAWINGS

FIG. 1 is a schematic structural diagram of a battery module according tosome embodiments.
FIG. 2 is a schematic exploded view of a battery module according tosome embodiments.
FIG. 3 is a schematic structural diagram of a top wall according tosome embodiments.
FIG. 4 is a partial schematic structural diagram of a battery module according tosome embodiments.
FIG. 5 is a partial schematic structural diagram of a battery module according tosome embodiments.
FIG. 6 is a schematic structural diagram of a cell according tosome embodiments.
FIG. 7 is a schematic structural diagram of a cell viewed along a direction Y' opposite to a third direction Y according tosome embodiments.
FIG. 8 is a schematic exploded view of a cell according tosome embodiments.
FIG. 9 is a schematic structural diagram of a cell according to some other embodiments.
FIG. 10 is a schematic structural diagram of a cell and a bracket according tosome embodiments.
FIG. 11 is a schematic structural diagram of a cell and a bracket from another perspective according tosome embodiments in FIG. 10.
FIG. 12 is a schematic structural diagram of a cell and a bracket from still another perspective according tosome embodiments in FIG. 10.
FIG. 13 is a schematic structural diagram of a cell and a bracket from yet another perspective according tosome embodiments in FIG. 10.
FIG. 14 is a schematic structural diagram of a cell unit viewed along a direction Y' opposite to a third direction Y according tosome embodiments.
FIG. 15 is a schematic structural diagram of a portion in FIG. 10 according tosome embodiments.
FIG. 16 is a schematic structural diagram of another portion in FIG. 10 according tosome embodiments.
FIG. 17 is a schematic structural diagram of a cell unit and an elastic member according tosome embodiments.
FIG. 18 is a schematic structural diagram of an elastic member according tosome embodiments.
FIG. 19 is a schematic structural diagram of an elastic member from another perspective according tosome embodiments.
FIG. 20 is a schematic structural diagram of an elastic member from still another perspective according tosome embodiments.
FIG. 21 is cross-sectional view of a plurality of cell units according tosome embodiments.
FIG. 22 is an enlarged view of a portion in FIG. 21.
FIG. 23 is a partial schematic structural diagram of a battery module according tosome embodiments.
FIG. 24 is an enlarged view of a portion in FIG. 23.
FIG. 25 is a partial schematic structural diagram of a battery module from another perspective according tosome embodiments.
FIG. 26 is an enlarged view of a portion in FIG. 25.
FIG. 27 is a schematic structural diagram of a sampling member according tosome embodiments.

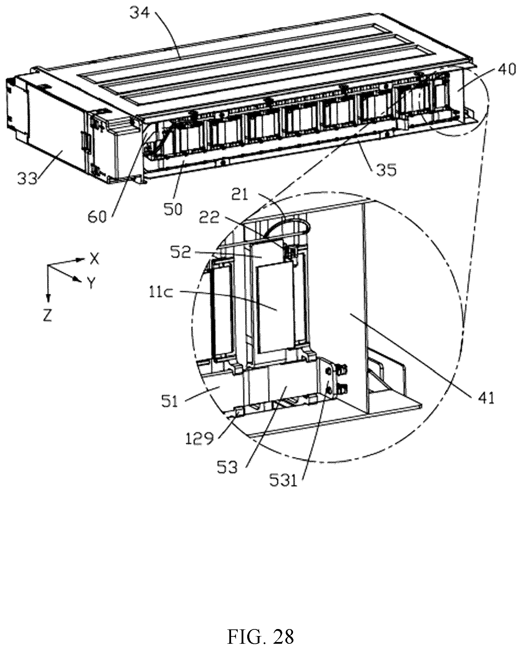

FIG. 28 is a partial schematic structural diagram of a battery module according tosome embodiments.
FIG. 29 is a schematic structural diagram of a first conductive member according tosome embodiments.
FIG. 30 is a schematic structural diagram of a second conductive member according tosome embodiments.
FIG. 31 is a schematic structural diagram of an electric device according tosome embodiments.

Reference signs of main components:

| | |
|---|---|
| Battery module | 100 |
| Cell unit | 10 |
| Accommodating space | 10b |
| First space | 10c |
| First stack portion | 10d |
| Second space | 10e |
| Third space | 10f |
| Overlap portion | 10g |
| First cell unit | 101 |
| Second cell unit | 102 |
| Third cell unit | 103 |
| Fourth cell unit | 104 |
| Cell | 11 |
| Cell housing | 11a |
| Electrode assembly | 11b |
| Electrode terminal | 11c |
| Body portion | 111 |
| First wall | 111c |
| Second wall | 111d |
| Third wall | 111e |
| Fourth wall | 111f |
| Fifth wall | 111g |
| Sixth wall | 111h |
| First housing | 111a |
| First recess | 111l |
| Second housing | 111b |
| Second recess | 1112 |
| First extension side | 1113 |
| Second extension side | 1114 |
| First sealing portion | 112 |
| First connection portion | 112a |
| Second connection portion | 112b |
| Third connection portion | 112c |
| Second sealing portion | 113 |
| Bracket | 12 |
| First portion | 121 |
| Second portion | 122 |
| First side surface | 122a |
| Second side surface | 122b |
| Step portion | 122c |
| First step surface | 1221 |
| First limiting portion | 1221a |
| Second step surface | 1222 |
| First side portion | 123 |
| First gap | 123a |
| Second side portion | 124 |
| Second gap | 124a |
| First extension portion | 125 |
| Second extension portion | 126 |
| Third portion | 127 |
| Fourth portion | 128 |
| Fourth fixed portion | 129 |
| First limiting protrusion | 129a |
| Second limiting protrusion | 129b |
| First protrusion | 110 |
| Third recess | 120 |
| Second protrusion | 130 |
| Fourth recess | 140 |
| Collection assembly | 20 |
| Wire | 21 |
| Sampling member | 22 |
| Opening | 22a |
| First part | 221 |
| First section | 221a |
| Third section | 221b |
| First bent portion | 2211 |
| Second part | 222 |
| Second section | 222a |
| Fourth section | 222b |
| Second bent portion | 2221 |
| Third part | 223 |
| Housing | 30 |
| First side wall | 31 |
| Second side wall | 32 |
| Front wall | 33 |
| Top wall | 34 |
| First fixed portion | 341 |
| Bottom wall | 35 |
| Second fixed portion | 351 |
| Elastic member | 40 |
| Base portion | 41 |
| Bulge | 411 |
| Folded portion | 42 |
| First folded portion | 421 |
| First folded section | 421a |
| Second folded section | 421b |
| Second folded portion | 422 |
| Third folded section | 422a |
| Fourth folded section | 422b |
| First connection section | 43 |
| Second connection section | 44 |
| First buffer member | 150 |
| Second buffer member | 160 |
| Connection terminal | 170 |
| First conductive member | 50 |
| Buffer part | 501 |
| First folded element | 5011 |
| Second folded element | 5012 |
| First conductive portion | 51 |
| Straight portion | 511 |
| Second conductive portion | 52 |
| Third conductive portion | 53 |
| Third fixed portion | 531 |
| Fourth conductive portion | 54 |
| Second conductive member | 60 |
| Fifth conductive portion | 61 |
| Sixth conductive portion | 62 |
| Circuit board | 70 |
| Electric device | 200 |
| First direction | X |
| Second direction | Y |
| Third direction | Z |

This application is further described with reference to the accompanying drawings in the following specific some embodiments.

### DETAILED DESCRIPTION OF EMBODIMENTS

The following specific some embodiments are exemplary and not restrictive, aiming to provide a basic understanding of this application but not to confirm critical or decisive elements of this application and not to limit the scope of protection. As long as there is no structural conflict, the various technical features mentioned in various some embodiments can be combined in any manner.

When one component is assumed as being "disposed at/on/in" another component, the component may be provided directly at/on/in the another component or with a component possibly present therebetween. When one component is assumed as being "connected to" another component, it may be connected to the another component directly or with a component possibly present therebetween.

It should be understood that the terms "perpendicular" and "equal to" are used for describing an ideal state of two components. During actual production or use, an approximately perpendicular or equal state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The term "parallel" is used for describing an ideal state of two components. During actual production or use, an approximately parallel state may be present between the two components. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of" in the specification specifically indicates that there are two or more components when used for describing the number of components.

In a first direction X, a first direction X and a direction opposite to the first direction X are present. In a second direction Y, a second direction Y and a direction opposite to the second direction Y are present. In a third direction Z, a third direction Z and a direction opposite to the third direction Z are present.

For ease of description, electrode terminals 11c in some accompanying drawings is not folded.

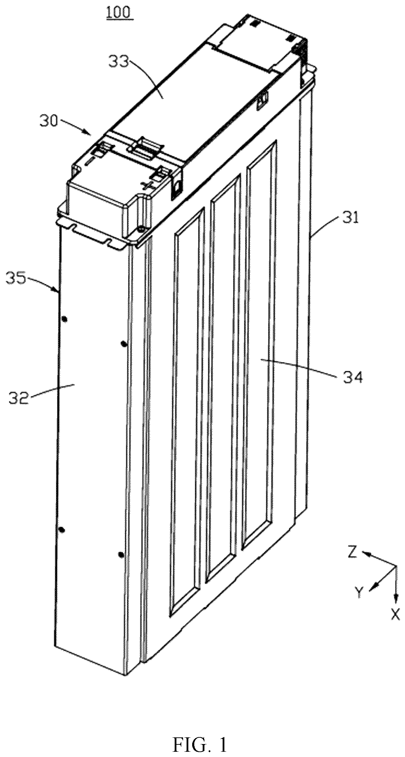

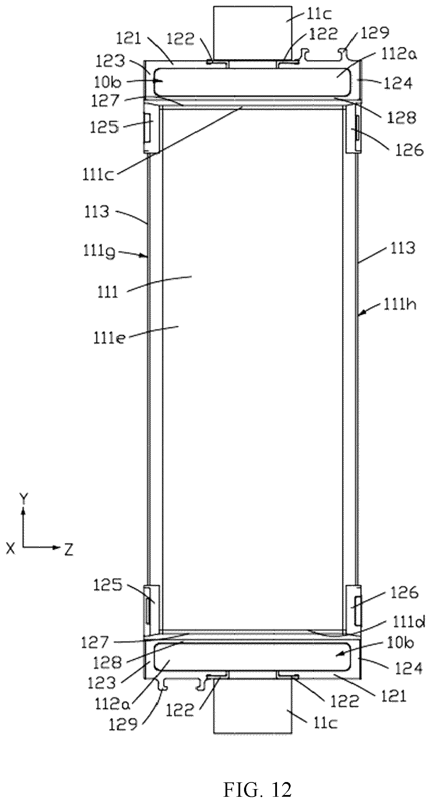

Referring to FIGs. 1 to 6 and FIG. 12, an embodiment of this application provides a battery module 100 including a plurality of cell units 10 and a collection assembly 20. The plurality of cell units 10 are arranged along a first direction X. Each cell unit 10 includes a cell 11 and a bracket 12, where the bracket 12 is connected to the cell 11. The cell 11 includes a cell housing 11a, an electrode assembly 11b, and an electrode terminal 11c connected to the electrode assembly 11b and extends out of the cell housing 11a.

The cell housing 11a includes a body portion 111 and a first sealing portion 112, and the electrode assembly 11b is disposed at the body portion 111. The first sealing portion 112 includes a first connection portion 112a, and the electrode terminal 11c extends out of the cell housing 11a from the first connection portion 112a. The bracket 12 includes a first portion 121, the first portion 121 covers a part of the first connection portion 112a, and the electrode terminal 11c extends from the first portion 121.

The collection assembly 20 includes a wire 21 and a plurality of sampling members 22, where the wire 21 is connected to each sampling member 22. At least one bracket 12 includes a second portion 122, the second portion 122 is connected to the first portion 121, at least one electrode terminal 11c is disposed at the second portion 122, the sampling member 22 is connected to the electrode terminal 11c, and the sampling member 22 is fixed to the second portion 122.

In this application, the sampling member 22 being connected to the electrode terminal 11c for sampling can reduce process steps and save materials. The first portion 121 covering the first connection portion 112a improves the toughness of the first connection portion 112a and is conducive to better connection between the sampling member 22 and the electrode terminal 11c. The sampling member 22 being fixed to the second portion 122 facilitates arrangement of the sampling member 22 and can improve the connection strength between the sampling member 22 and the electrode terminal 11c.

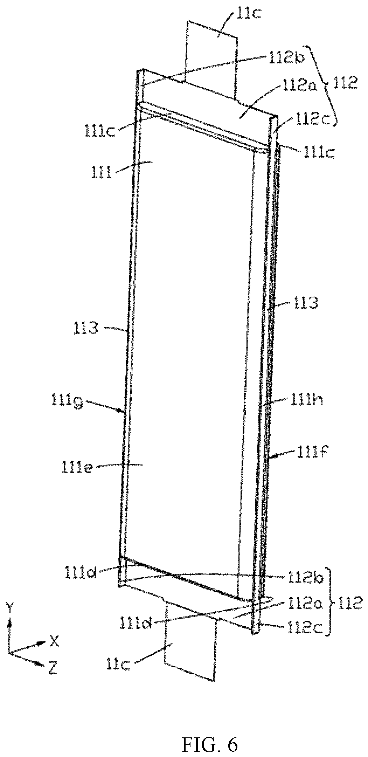

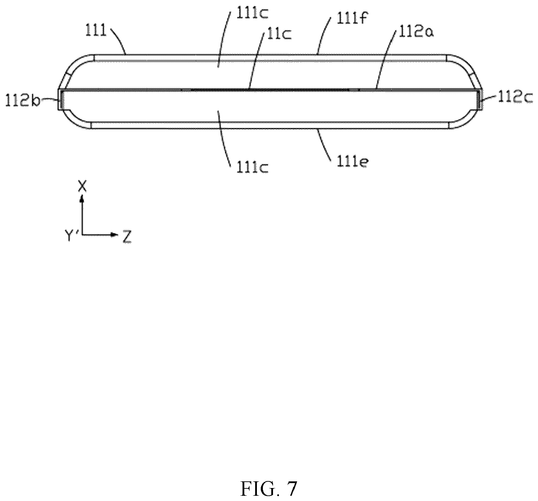

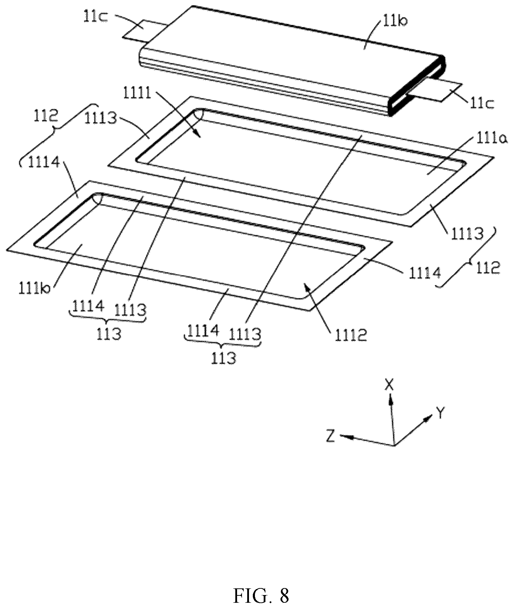

Referring to FIGs. 6, 7, and 8, the cell 11 includes a pouch cell. The body portion 111 is provided with an accommodating space. The body portion 111 includes a first housing 111a and a second housing 111b, where the first housing 111a is provided with a first recess 1111, and the second housing 111b is provided with a second recess 1112. The first housing 111a is connected to the second housing 111b to form the accommodating space. The electrode assembly 11b has a portion disposed at the first recess 1111 and another portion disposed at the second recess 1112.

Insome embodiments, the body portion 111 is provided with an accommodating space, the body portion 111 includes a first housing 111a and a second housing 111b, where the first housing 111a is provided with a first recess 1111, and the second housing 111b is flat. The first housing 111a is connected to the second housing 111b to form the accommodating space. The electrode assembly 11b is disposed at the first recess 1111.

Insome embodiments, a peripheral side of the first housing 111a extends outward to form a first extension side 1113, and a peripheral side of the second housing 111b extends outward to form a second extension side 1114. After the first housing 111a is connected to the second housing 111b, the first extension side 1113 and the second extension side 1114 overlap and are hermetically connected to form two first sealing portions 112 and two second sealing portions 113. The two first sealing portions 112 are disposed along a second direction Y. The two second sealing portions 113 are disposed along a third direction Z. One first sealing portion 112 is connected to the two second sealing portions 113, and the other first sealing portion 112 is connected to the two second sealing portions 113.

Insome embodiments, the cell 11 includes two electrode terminals 11c, where one electrode terminal 11c extends out of the cell housing 11a from one first sealing portion 112, and the other electrode terminal 11c extends out of the cell housing 11a from the other first sealing portion 112.

Insome embodiments, the cell 11 includes two electrode terminals 11c, where the two electrode terminals 11c extend out of the cell housing 11a from a same first sealing portion 112.

Insome embodiments, the first extension side 1113 and the second extension side 1114 overlap and are hermetically connected to form a first sealing portion 112 and two second sealing portions 113. The two second sealing portions 113 are disposed along the third direction Z. The first sealing portion 112 is connected to the two second sealing portions 113. The cell 11 includes two electrode terminals 11c, where the two electrode terminals 11c extend out of the cell housing 11a from the first sealing portion 112.

Insome embodiments, the body portion 111 includes a first wall 111c, a second wall 111d, a third wall 111e, and a fourth wall 111f. The second wall 111d and the first wall 111c are disposed along the second direction Y, and the third wall 111e and the fourth wall 111f are disposed along the first direction X. Optionally, the first sealing portion 112 is connected to the first wall 111c. Optionally, one first sealing portion 112 is connected to the first wall 111c, and the other first sealing portion 112 is connected to the second wall 111d.

Insome embodiments, the body portion 111 includes a fifth wall 111g and a sixth wall 111h, where the fifth wall 111g and the sixth wall 111h are disposed along the third direction Z. One second sealing portion 113 is connected to the fifth wall 111g, and the other second sealing portion 113 is connected to the sixth wall 111h.

Insome embodiments, the first sealing portion 112 includes a first connection portion 112a, a second connection portion 112b, and a third connection portion 112c. The electrode terminal 11c extends from the first connection portion 112a. The first connection portion 112a is connected to the second connection portion 112b and the third connection portion 112c, and the second connection portion 112b and the third connection portion 112c are disposed along the third direction Z. The second connection portion 112b is folded relative to the first connection portion 112a, and the third connection portion 112c is folded relative to the first connection portion 112a. When viewed along a direction Y' opposite to the second direction Y, in the first direction X, the second connection portion 112b and the third connection portion 112c are located on a same side of the first connection portion 112a.

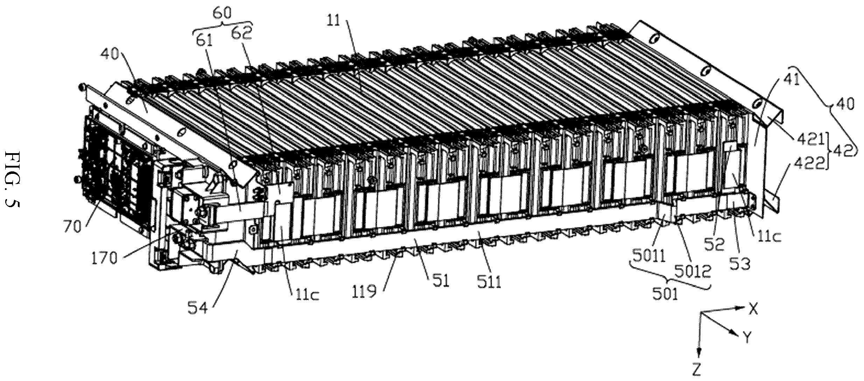

Referring to FIGs. 5 and 6, insome embodiments, adjacent body portions 111 are in contact connection with each other, allowing the body portion 111 to be pressed. Optionally, a third wall 111e of a cell housing 11a is in contact connection with a fourth wall 111f of a cell housing 11a adjacent thereto. Optionally, a third wall 111e of a cell housing 11a is in contact connection with a third wall 111e of a cell housing 11a adjacent thereto, and a fourth wall 111f of a cell housing 11a is in contact connection with a fourth walllllf of a cell housing 11a adjacent thereto.

Insome embodiments, adjacent cell housings 11a exert pressure on each other, so that the plurality of cell units 10 are in a pressed state, conducive to prolonging the service life of the cell unit.

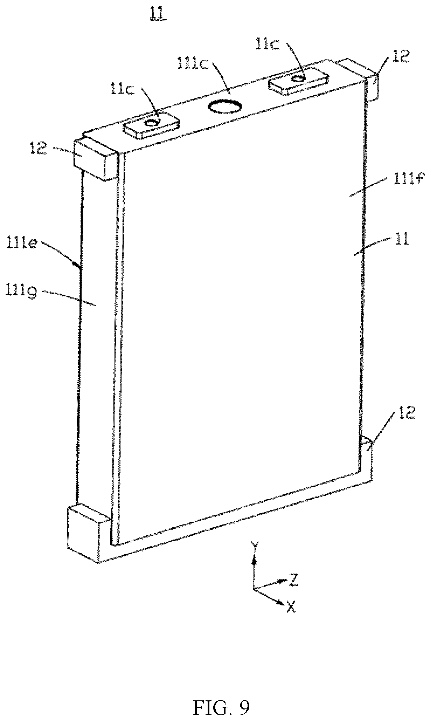

Referring to FIG. 9, insome embodiments, the cell 11 includes a prismatic cell. The prismatic cell includes a hard enclosure, and the electrode assembly 11b is disposed in the hard enclosure.

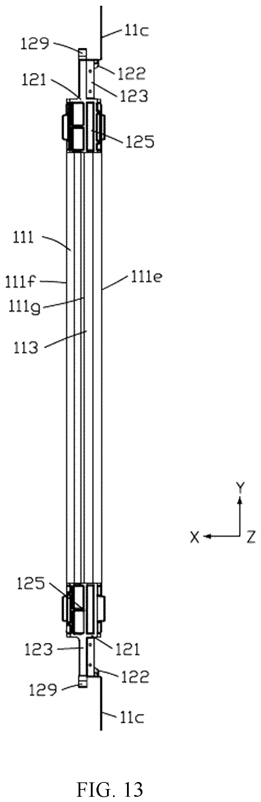

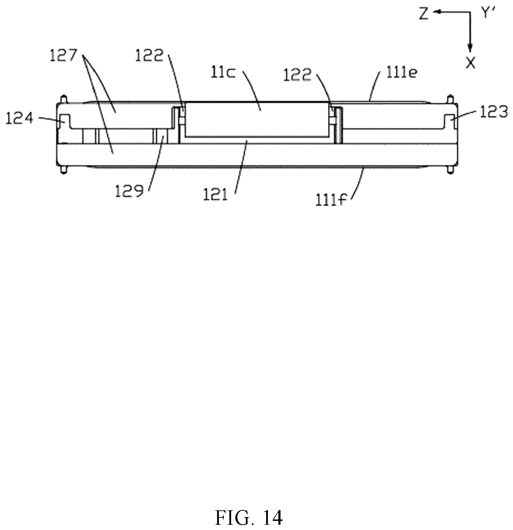

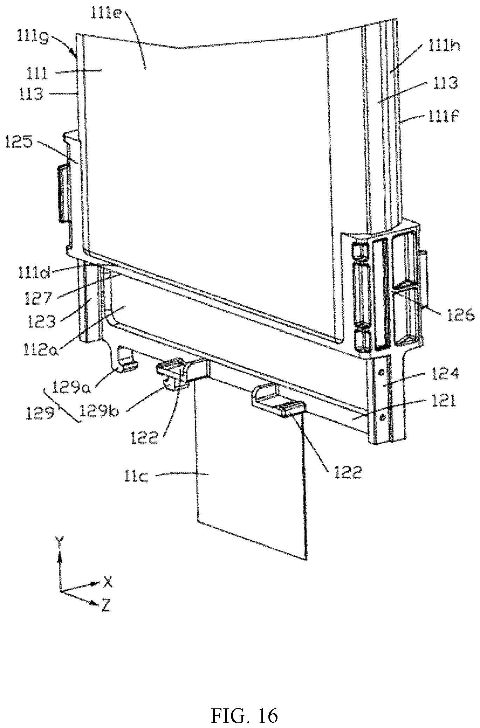

Referring to FIG. 6 and FIGs. 10 to 16, insome embodiments, the bracket 12 is integrally formed with the cell 11, which is conducive to improving the connection strength between the bracket 12 and the cell 11. Optionally, the bracket 12 is integrally formed with the cell 11 through low-pressure injection molding.

Insome embodiments, the bracket 12 includes an insulation bracket, which is conducive to reducing the risk of short circuit between the bracket 12 and the cell 11.

In an embodiment, when viewed along the direction Y' opposite to the second direction Y, in the first direction X, the first portion 121 is located between the third wall 111e and the fourth wall 111f. When body portions 111 of adjacent cells 11 apply pressure to each other, the stress on the first sealing portion 112 can be reduced, and the protection for the first sealing portion 112 can be improved.

Insome embodiments, the bracket 12 includes a first side portion 123 and a second side portion 124. The first side portion 123 covers the second connection portion 112b and the second side portion 124 covers the third connection portion 112c, which can protect a part of the first sealing portion 112.

Insome embodiments, the first portion 121 is connected to the first side portion 123 and the second side portion 124, which can improve the structural strength of the bracket 12 and is conducive to protecting the first sealing portion 112.

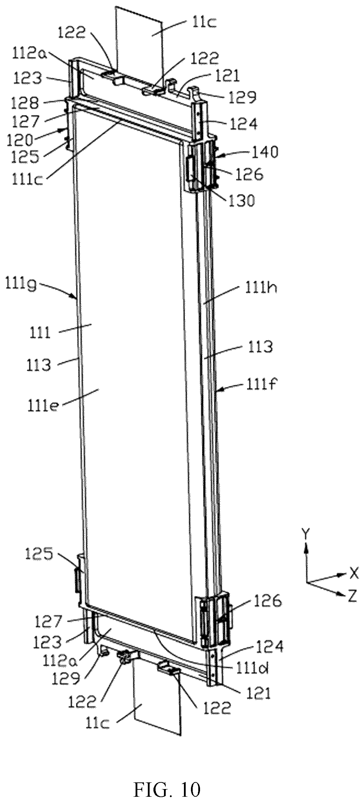

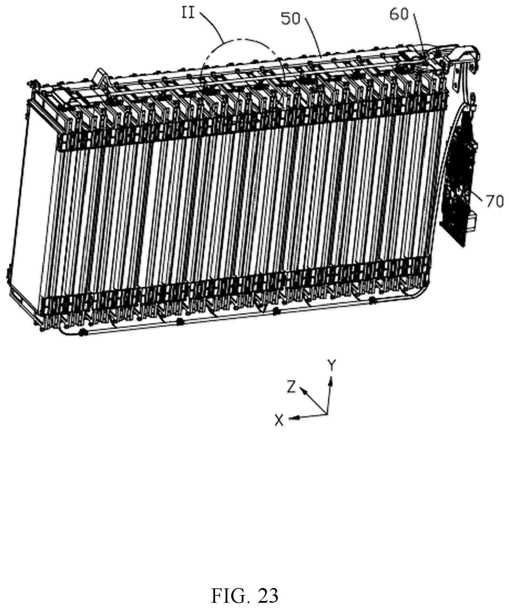

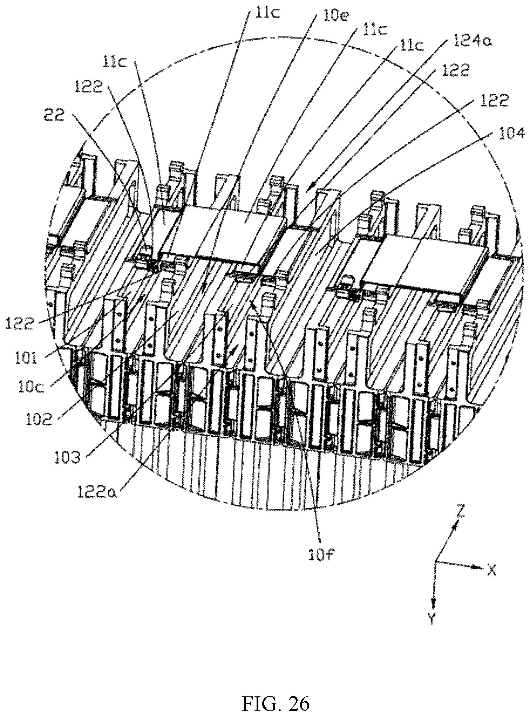

Referring to FIGs. 10 to 16 and FIGs. 23 and 26, insome embodiments, the bracket 12 includes a first extension portion 125. Along the direction Y' opposite to the second direction Y, the first extension portion 125 extends from the first side portion 123, and the first extension portion 125 covers the fifth wall 111g and the second sealing portion 113. This can protect the body portion 111 and the second sealing portion 113 and improve the connection strength between the bracket 12 and the cell 11.

Optionally, in the second direction Y, the fifth wall 111g is partially provided with the first extension portion 125, the second sealing portion 113 is partially provided with the first extension portion 125. This can protect a part of the body portion 111 and a part of the second sealing portion 113, improve the connection strength between the bracket 12 and the cell 11, and facilitate integral formation of the bracket 12 and the cell 11.

Optionally, in the second direction Y, the fifth wall 111g isentirely provided with the first extension portion 125, the second sealing portion 113 is entirely provided with the first extension portion 125. This can better protect the body portion 111 and the second sealing portion 113 and better improve the connection strength between the bracket 12 and the cell 11.

Insome embodiments, when viewed along the direction Y' opposite to the second direction Y, in the first direction X, the first side portion 123 does not exceed the first extension portion 125, and a first gap 123a is formed between adjacent first side portions 123. When adjacent cell housings 11a are in contact connection with each other and apply pressure to each other, the first gap 123a can reduce an acting force on the first side portion 123, thereby reducing an acting force on the first sealing portion 112 and helping to protect the first sealing portion 112. The first gap 123a is also conducive to heat dissipation of the cell 11.

Insome embodiments, the bracket 12 includes a second extension portion 126. When viewed along the direction Y' opposite to the second direction Y, the second extension portion 126 extends from the second side portion 124, and the second extension portion 126 covers the sixth wall 111h and the other second sealing portion 113. This can protect the body portion 111 and the other second sealing portion 113 and further improve the connection strength between the bracket 12 and the cell 11. When viewed along the first direction X, in the second direction Y, a part of the body portion 111 is located between the first extension portion 125 and the second extension portion 126.

Optionally, in the second direction Y, the sixth wall 111h is partially provided with the second extension portion 126, the other second sealing portion 113 is partially provided with the second extension portion 126. This can protect a part of the body portion 111 and a part of the other second sealing portion 113, improve the connection strength between the bracket 12 and the cell 11, and facilitate integral formation of the bracket 12 and the cell 11.

Optionally, in the second direction Y, the sixth wall 111h is entirely provided with the second extension portion 126 , the other second sealing portion 113 is entirely provided with the second extension portion 126.. This can better protect the body portion 111 and the second sealing portion 113 and better improve the connection strength between the bracket 12 and the cell 11.

Insome embodiments, when viewed along the direction Y' opposite to the second direction Y, in the first direction X, the second side portion 124 does not exceed the second extension portion 126, and a second gap 124a is formed between adjacent second side portions 124. When adjacent cell housings 11a are in contact connection with each other and apply pressure to each other, the second gap 124a can reduce an acting force on the second side portion 124, thereby further reducing an acting force on the first sealing portion 112 and further helping to protect the first sealing portion 112. The second gap 124a is also conducive to heat dissipation of the cell 11.

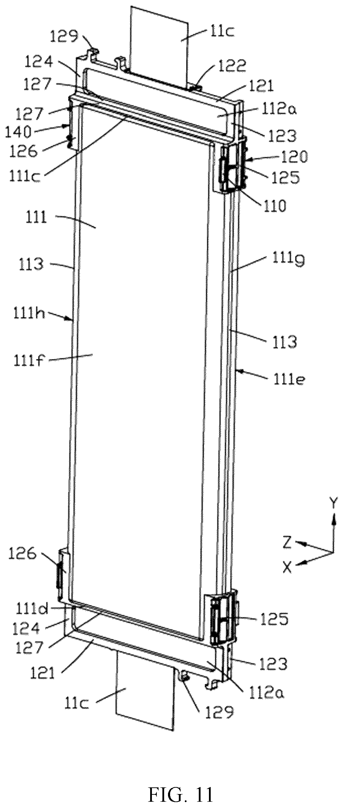

Referring to FIGs. 10 and 11, insome embodiments, along the first direction X, the bracket 12 includes a first protrusion 110 and a third recess 120, where the third recess 120 is provided in the first extension portion 125, and the first protrusion 110 extends from the first extension portion 125. When body portions 111 of adjacent cells 11 are in contact connection with each other, the first protrusion 110 is disposed in a third recess 120 of a bracket 12 adjacent thereto. A gap is provided between the first protrusion 110 and the third recess 120. Adjacent brackets 12 are positioned via the third recess 120 and the first protrusion 110, reducing displacement of adjacent body portions 111 and helping a plurality of body portions 111 to apply pressure to each other. The gap between the first protrusion 110 and the third recess 120 can reduce the stress on the bracket 12, improve the protection for the first sealing portion 112, and improve the connection strength between the bracket 12 and the cell 11.

Insome embodiments, along the first direction X, the bracket 12 includes a second protrusion 130 and a fourth recess 140, where the fourth recess 140 is provided in the second extension portion 126, and the second protrusion 130 extends from the second extension portion 126. When body portions of adjacent cells 11 are in contact connection with each other, the second protrusion 130 is disposed in a fourth recess 140 of a bracket 12 adjacent thereto. A gap is provided between the second protrusion 130 and the fourth recess 140. Adjacent brackets 12 are further positioned via the fourth recess 140 and the second protrusion 130, further reducing displacement of adjacent body portions 111 and further helping a plurality of body portions 111 to apply pressure to each other. The gap between the second protrusion 130 and the fourth recess 140 can reduce the stress on the bracket 12, further improve the protection for the first sealing portion 112, and further improve the connection strength between the bracket 12 and the cell 11.

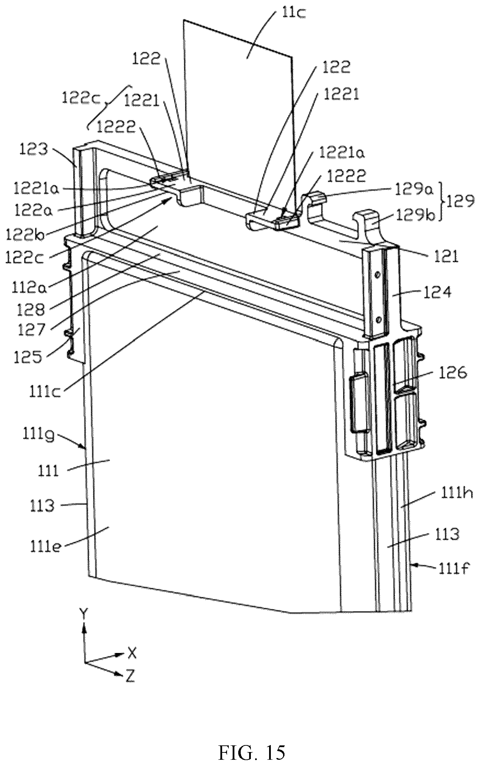

Referring to FIG. 15, insome embodiments, the bracket 12 includes a third portion 127, where the third portion 127 covers a part of the first wall 111c to protect the body portion 111. The first portion 121 has one end connected to the first side portion 123 and another end connected to the second side portion 124, and the third portion 127 has one end connected to the first side portion 123 and another end connected to the second side portion 124. This can further improve the structural strength of the bracket 12 and is further conducive to protecting the first sealing portion 112. The third portion 127, the first portion 121, the first side portion 123, and the second side portion 124 enclose an accommodating space 10b, and the first connection portion 112a is partially located in the accommodating space 10b. A peripheral side of the first connection portion 112a is protected via the first portion 121, the first side portion 123, the second side portion 124, and the third portion 127. The accommodating space 10b provides a swelling space for the first sealing portion 112, reducing the influence of gas production and/or a free electrolyte in the cell 11 on the sealing performance of the first sealing portion 112. The accommodating space 10b can also achieve heat dissipation of the cell 11.

Insome embodiments, the cell 11 includes an electrolyte, where the electrolyte is provided in the cell housing 11a. The electrode assembly 11b includes a first electrode plate, a separator, and a second electrode plate, and the electrode assembly 11b is formed by winding or stacking the first electrode plate, the separator, and the second electrode plate. Part of the electrolyte infiltrates the first electrode plate, the separator, and the second electrode plate for transferring electrical ions, and part of the electrolyte is attached to the surface of the cell housing 11a and/or the surface of the electrode assembly 11b in a free state, where the electrolyte in the free state is a free electrolyte. During cycling of a plurality of cells 11, the free electrolyte in the cell 11 is extruded. In this application, the accommodating space 10b provides the swelling space for the first sealing portion 112, reducing the influence of swelling of the cell 11 on the sealing performance of the first sealing portion 112.

Insome embodiments, when viewed along the direction Y' opposite to the second direction Y, in the first direction X, the third portion 127 is located between the third wall 111e and the fourth wall 111f. The third portion 127 does not exceed the third wall 111e in the first direction X, and the third portion 127 does not exceed the fourth wall 111f in the first direction X. When adjacent cell housings 11a are in contact connection with each other, a gap is provided between adjacent third portions 127. This reduces the influence of pressure mutually applied by the adjacent cell housings 11a on the third portion 127, reduces the acting force on the first sealing portion 112, is conducive to protecting the first sealing portion 112, and is conducive to the connection stability between the bracket 12 and the cell 11.

Referring to FIG. 15, insome embodiments, the bracket 12 includes a fourth portion 128, where the fourth portion 128 is connected to a side of the third portion 127 facing the first portion 121. The fourth portion 128 extends from the third portion 127 along the second direction Y, and the fourth portion 128 covers a part of the first connection portion 112a. The fourth portion 128 can support and protect a part of the first sealing portion 112 extending out of the third portion 127, reducing the influence on the sealing performance of the cell 11 caused by the damage of the first sealing portion 112.

Referring to FIGs. 10 to 16, insome embodiments, the cell unit 10 includes two brackets 12, where one bracket 12 is connected to a part of one first sealing portion 112 and the other bracket 12 is connected to a part of the other first sealing portion 112. One electrode terminal 11c extends out of the first sealing portion 112 and the bracket 12 along the second direction Y, and the other electrode terminal 11c extends out of the second sealing portion 113 and the bracket 12 along the direction opposite to the second direction Y. The two brackets 12 improve the protection for the first sealing portion 112 and the second sealing portion 113 and provide a swelling space for the first sealing portion 112, thereby reducing the influence of gas production and/or a free electrolyte in the cell 11 on the sealing performance of the first sealing portion 112, and facilitating heat dissipation of the first sealing portion 112.

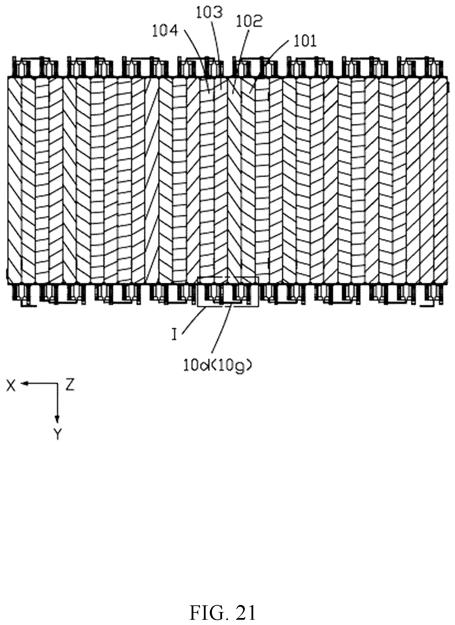

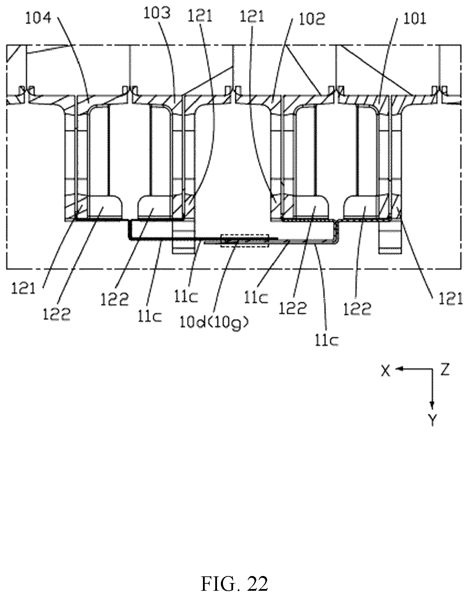

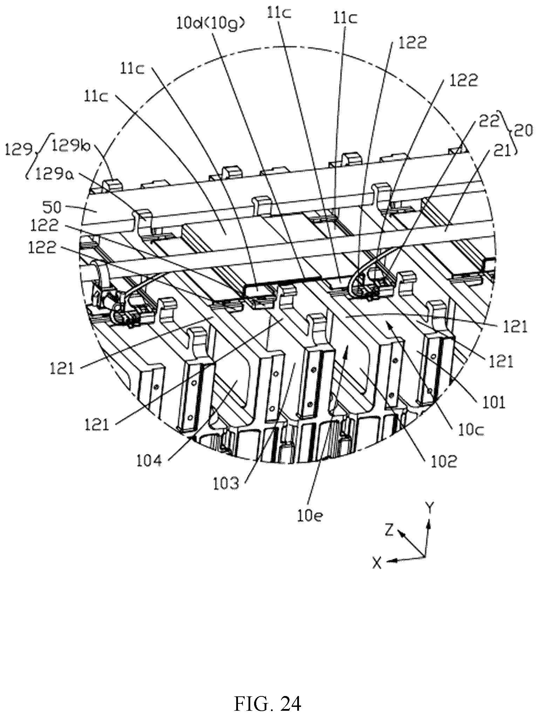

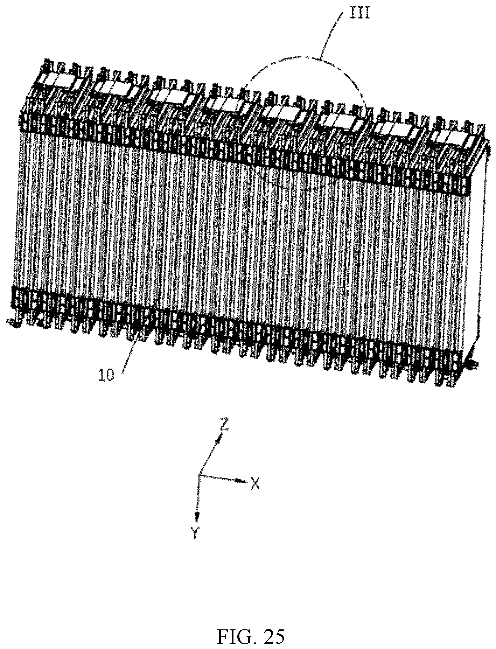

Referring to FIGs. 21 to 26, insome embodiments, the second portion 122 and the first portion 121 are disposed along the first direction X, and the second portion 122 extends from the first portion 121 along a direction opposite to the first direction X. Along the second direction Y, a projection of the electrode terminal 11c overlaps a projection of the second portion 122.

Insome embodiments, the second portion 122 and the first portion 121 are arranged in a direction opposite to the first direction X. Along the first direction X, the second portion 122 extends from the first portion 121. Along the second direction Y, the projection of the electrode terminal 11c overlaps the projection of the second portion 122.

Insome embodiments, the plurality of cell units 10 include a first cell unit 101 and a second cell unit 102, where the first cell unit 101 and the second cell unit 102 are adjacent to each other along the first direction X. An electrode terminal 11c of the first cell unit 101 and an electrode terminal 11c of the second cell unit 102 are connected in a folding manner. Along the first direction X, a first space 10c is provided between a bracket 12 of the first cell unit 101 and a bracket 12 of the second cell unit 102. A second portion 122 of the first cell unit 101 faces a second portion 122 of the second cell unit 102, and the second portion 122 of the second cell unit 102 faces the second portion 122 of the first cell unit 101.

Along the second direction Y, a projection of the second portion 122 of the first cell unit 101 is located in a projection of the first space 10c, and a projection of the second portion 122 of the second cell unit 102 is located in the projection of the first space 10c.

Insome embodiments, the plurality of cell units 10 include a third cell unit 103. The second cell unit 102 and the third cell unit 103 are arranged adjacent to each other along the first direction X. A second portion 122 of the third cell unit 103 is away from a first portion 121 of the second cell unit 102. An electrode terminal 11c of the third cell unit 103 is connected in a folding manner to the electrode terminal 11c of the first cell unit 101 and/or the electrode terminal 11c of the second cell unit 102. The electrode terminal 11c of the first cell unit 101 and the electrode terminal 11c of the second cell unit 102 are folded along the first direction X. The electrode terminal 11c of the third cell unit 103 is folded along the direction opposite to the first direction X.

Optionally, the electrode terminal 11c of the third cell unit 103 is welded to the electrode terminal 11c of the first cell unit 101 and the electrode terminal 11c of the second cell unit 102. Optionally, the welding includes laser welding, ultrasonic welding, and the like.

Along the second direction Y, the electrode terminal 11c of the first cell unit 101, the electrode terminal 11c of the second cell unit 102, and the electrode terminal 11c of the third cell unit 103 are stacked to form a first stack portion 10d. Along the second direction Y, a projection of the first stack portion 10d is located between the projection of the second portion 122 of the second cell unit 102 and a projection of the second portion 122 of the third cell unit 103, which can reduce the interference of the second portion 122 to the first stack portion 10d and facilitate the welding of the first stack portion 10d.

The stacking arrangement includes various ways. For example, the electrode terminal 11c of the first cell unit 101 is located between the electrode terminal 11c of the second cell unit 102 and the electrode terminal 11c of the third cell unit 103. For example, the electrode terminal 11c of the second cell unit 102 is located between the electrode terminal 11c of the first cell unit 101 and the electrode terminal 11c of the third cell unit 103. For example, the electrode terminal 11c of the third cell unit 103 is located between the electrode terminal 11c of the first cell unit 101 and the electrode terminal 11c of the second cell unit 102.

Insome embodiments, along the second direction Y, the projection of the first stack portion 10d is located between the projection of the second portion 122 of the second cell unit 102 and the projection of the second portion 122 of the third cell unit 103, facilitating welding.

Insome embodiments, along the third direction Z, the projection of the first stack portion 10d is located between a projection of the first portion 121 of the second cell unit 102 and a projection of a first portion 121 of the third cell unit 103, which further facilitates the welding of the first stack portion 10d and reduces the influence on the bracket 12 during welding.

Insome embodiments, along the first direction X, a second space 10e is provided between a bracket 12 of the third cell unit 103 and the bracket 12 of the second cell unit 102. Along the second direction Y, the projection of the first stack portion 10d is located in a projection of the second space 10e, which can further reduce the interference of the second portion 122 to the first stack portion 10d and further facilitate the welding of the first stack portion 10d.

Insome embodiments, the cell unit 10 includes a fourth cell unit 104. The third cell unit 103 and the fourth cell unit 104 are arranged adjacent to each other along the first direction X. The second portion 122 of the third cell unit 103 faces a second portion 122 of the fourth cell unit 104, and the second portion 122 of the fourth cell unit 104 faces the second portion 122 of the third cell unit 103.

Along the first direction X, a third space 10f is provided between the bracket 12 of the third cell unit 103 and a bracket 12 of the fourth cell unit 104. Along the second direction Y, the projection of the second portion 122 of the third cell unit 103 is located in a projection of the third space 10f, and a projection of the second portion 122 of the fourth cell unit 104 is located in the projection of the third space 10f. An electrode terminal 11c of the fourth cell unit 104 and the first stack portion 10d are connected in a folding manner to form an overlap portion 10g. Optionally, the electrode terminal 11c of the fourth cell unit 104 may be disposed between electrode terminals 11c in the first stack portion 10d. Optionally, the electrode terminal 11c of the fourth cell unit 104 and the first stack portion 10d are stacked in sequence.

Insome embodiments, along the second direction Y, a projection of the overlap portion 10g is located between the projection of the second portion 122 of the second cell unit 102 and the projection of the second portion 122 of the third cell unit 103, facilitating the welding of the overlap portion 10g.

Insome embodiments, along the second direction Y, the projection of the overlap portion 10g is located between the projection of the first portion 121 of the second cell unit 102 and the projection of the first portion 121 of the third cell unit 103, which further facilitates the welding of the first stack portion 10d and reduces the influence on the bracket 12 during welding.

Optionally, along the second direction Y, the projection of the overlap portion 10g is located in the projection of the second space 10e, which can further reduce the interference of the second portion 122 to the overlap portion 10g and further facilitate the welding of the first overlap portion 10g.

Insome embodiments, the electrode terminal 11c of the first cell unit 101 and the electrode terminal 11c of the second cell unit 102 are connected in parallel to form a first group of cells, and the electrode terminal 11c of the third cell unit 103 and the electrode terminal 11c of the fourth cell unit 104 are connected in parallel to form a second group of cells, where the first group of cells and the second group of cells are connected in series.

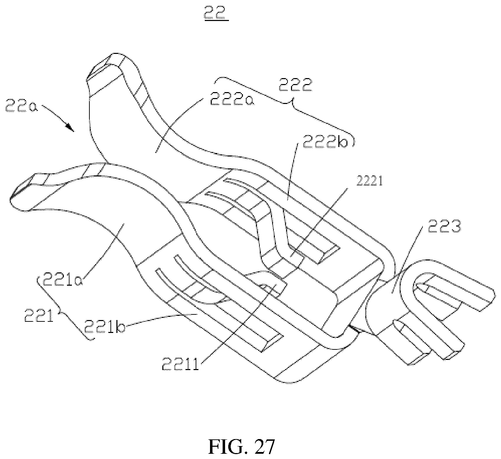

Referring to FIGs. 15, 16, 24, 26, and 27, insome embodiments, the second portion 122 includes a first side surface 122a and a second side surface 122b disposed along the direction Y' opposite to the second direction Y, where the first side surface 122a is farther away from the body portion 111 than the second side surface 122b. A side of the sampling member 22 is connected to the second side surface 122b. The electrode terminal 11c is located between the first side surface 122a and the sampling member 22.

Insome embodiments, at least one of the first side surface 122a or the second side surface 122b is provided with a step portion 122c. The sampling member 22 is connected to the step portion 122c, which can improve the connection strength between the sampling member 22 and the second portion 122 and reduce the risk of separation of the sampling member 22 from the second portion 122.

Optionally, the first side surface 122a is provided with a step portion 122c and the second side surface 122b is provided with a step portion 122c, which can further improve the connection strength between the sampling member 22 and the second portion 122 and further reduce the risk of separation of the sampling member 22 from the second portion 122.

Insome embodiments, the step portion 122c includes a first step surface 1221 and a second step surface 1222, where the first step surface 1221 and the second step surface 1222 are arranged along the third direction Z. Along the second direction Y, a thickness of the first step surface 1221 is less than a thickness of the second step surface 1222, so as to form the step portion 122c. The sampling member 22 has a portion connected to the first step surface 1221 and another portion connected to the second step surface 1222. Along the second direction Y, a projection of the first step surface 1221 overlaps the projection of the electrode terminal 11c, and the electrode terminal 11c is disposed on the first step surface 1221. Along the second direction Y, a projection of the second step surface 1222 is spaced apart from the projection of the electrode terminal 11c.

Insome embodiments, the first step surface 1221 is provided with a first limiting portion 1221a, where the first limiting portion 1221a is obtained by recessing of the surface of the first step surface 1221. When the sampling member 22 is connected to the second portion 122, a part of the sampling member 22 is disposed at the first limiting portion 1221a, which can limit separation of the sampling member 22 from the second portion 122 and improve the connection strength between the sampling member 22 and the second portion 122.

Insome embodiments, along the second direction Y, a projection of the first limiting portion 1221a is spaced apart from the projection of the electrode terminal 11c, which can reduce the risk of the sampling member 22 pressing the electrode terminal 11c in the first limiting portion 1221a and is conducive to protecting the electrode terminal 11c.

Insome embodiments, the bracket 12 includes two second portions 122. The two second portions 122 are opposite to each other along the third direction Z, which can facilitate the adjustment of positions of the wire 21 and the sampling member 22 and is conducive to spatial layout. Along the second direction Y, the projection of the electrode terminal 11c is located between projections of first limiting portions 1221a of the two second portions 122.

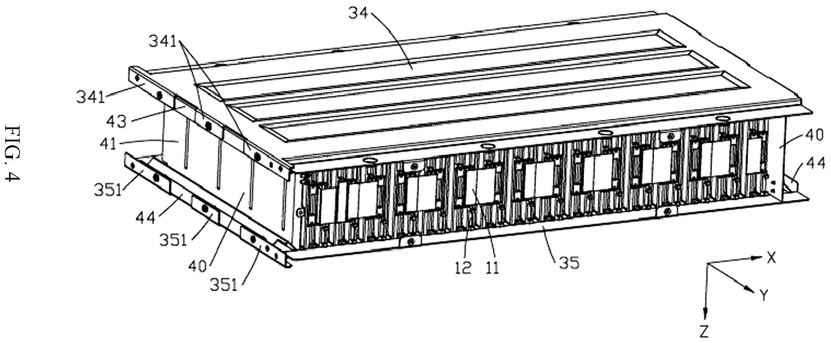

Referring to FIGs. 4, 6, and 27, insome embodiments, the sampling member 22 includes a first part 221 and a second part 222, where one end of the first part 221 and one end of the second part 222 are connected to each other, and another end of the first part 221 and another end of the second part 222 are apart from each other to form an opening 22a. The first part 221 includes a first section 221a, and the second part 222 includes a second section 222a. The first section 221a is connected to the first side surface 122a, and the second section 222a is connected to the second side surface 122b. Optionally, the first section 221a is connected to the first step surface 1221 of the first side surface 122a, and the second section 222a is connected to the first step surface 1221 of the second side surface 122b.

Insome embodiments, the first section 221a is bent toward the second section 222a, and the first section 221a is connected to the first step surface 1221. The first step surface 1221 can limit the first section 221a and improve the connection strength between the first section 221a and the step portion 122c. The first section 221a and the second section 222a form the opening 22a, and the second section 222a is bent toward the first section 221a. This can increase a clamping force between the first section 221a and the second section 222a and is conducive to improving the connection strength between the sampling member 22 and the second portion 122, thereby improving the connection strength between the sampling member 22 and the electrode terminal 11c. A free end of the first section 221a is bent away from the second section 222a, and a free end of the second section 222a is bent away from the first section 221a, so that the opening 22a can be enlarged, facilitating connection between the sampling member 22 and the second portion 122.

Insome embodiments, the first part 221 includes a third section 221b, where the third section 221b is connected to the first section 221a. The third section 221b is provided with a first bent portion 2211 bent toward the first limiting portion 1221a. When the sampling member 22 is connected to the second portion 122, the first bent portion 2211 is disposed at the first limiting portion 1221a, and the first bent portion 2211 is configured to limit separation of the sampling member 22 from the second portion 122, which can improve the connection strength between the sampling member 22 and the second portion 122.

The second part 222 includes a fourth section 222b, where the fourth section 222b is connected to the second section 222a. The fourth section 222b is provided with a second bent portion 2221 bent toward the first limiting portion 1221a. When the sampling member 22 is connected to the second portion 122, the second bent portion 2221 is disposed at the first limiting portion 1221a, and the second bent portion 2221 is configured to limit separation of the sampling member 22 from the second portion 122, which can further improve the connection strength between the sampling member 22 and the second portion 122.

Insome embodiments, the first part 221 and the second part 222 are integrally formed, for example, integrally formed through punching.

Insome embodiments, the sampling member 22 includes a third part 223. The third part 223 is connected to the first part 221 and/or the second part 222. The wire 21 is connected to the third part 223. The third part 223 can improve the connection strength between the wire 21 and the sampling member 22 and facilitate the extension of the wire 21 from the sampling member 22.

Insome embodiments, the sampling member 22 can collect electrical signal information of the cell 11, where the electrical signal information includes but is not limited to voltage, current, and temperature.

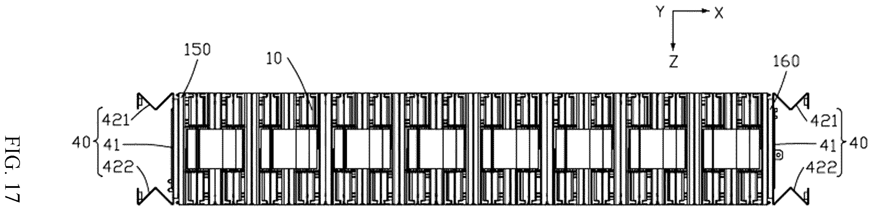

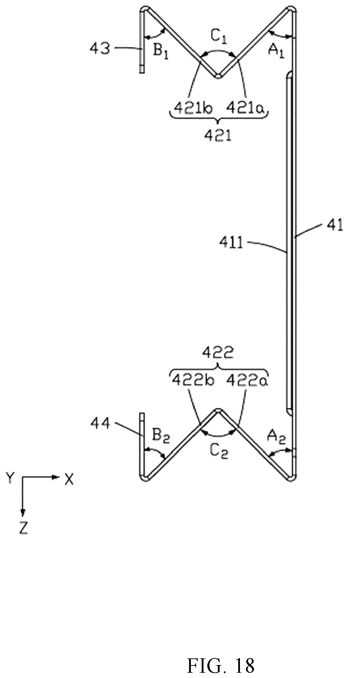

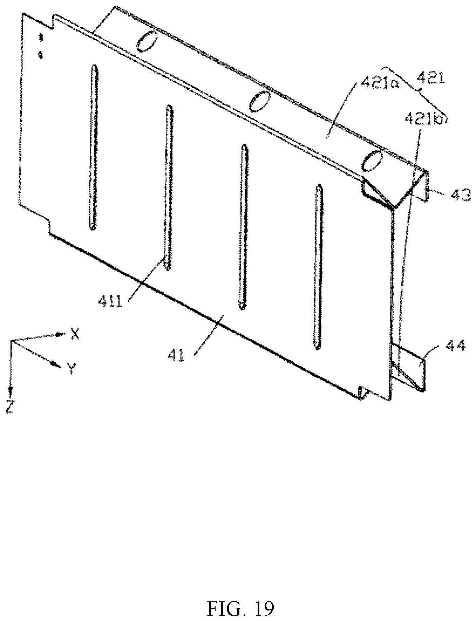

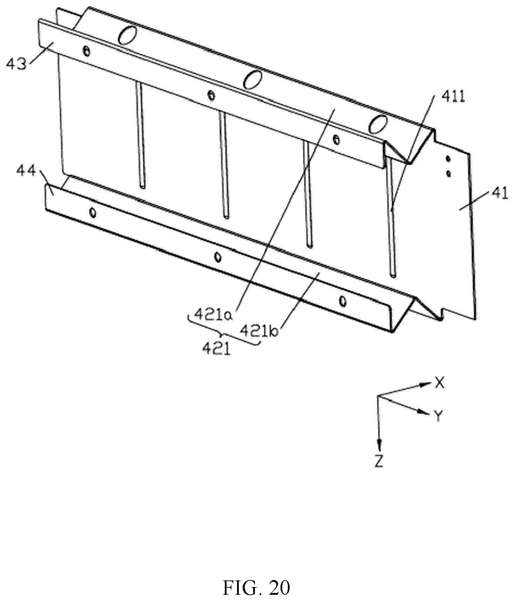

Referring to FIGs. 1 to 5 and 17 to 20, the battery module 100 includes a housing 30 and an elastic member 40, where the elastic member 40 is fixed to the housing 30. The elastic member 40 and the cell unit 10 are arranged in the first direction X. The elastic member 40 is configured to be able to apply pressure to the cell unit 10 and provide a swelling space for the cell unit 10.

Insome embodiments, when the cell unit 10 swells, pressure applied to the cell unit 10 increases, and the folded portion 42 provides a swelling space for the cell unit 10, so that the pressure applied to the cell unit 10 can be buffered, thereby reducing the influence on the service life of the battery module 100. The base portion 41 continuously applies pressure to the cell unit 10, so that the cell unit 10 is in a pressed state and maintains dynamic balance, conducive to prolonging the service life of the battery module 100.

Insome embodiments, the elastic member 40 and the cell unit 10 are arranged along the first direction X.

Insome embodiments, the elastic member 40 and the cell unit 10 are arranged in the direction opposite to the first direction X.

Insome embodiments, when the battery module 100 includes a plurality of cell units 10, the elastic member 40 may be located between two adjacent cell units 10.

Insome embodiments, the housing 30 includes a first side wall 31, a second side wall 32, a front wall 33, a top wall 34, a bottom wall 35, and a rear wall (not shown in the figure). The top wall 34 and the bottom wall 35 are arranged along the third direction Z. The first side wall 31 and the second side wall 32 are arranged along the second direction Y. The front wall 33 is connected to the first side wall 31 and the second side wall 32. The first direction X, the third direction Z, and the second direction Y are perpendicular to each other. The top wall 34 is connected to the front wall 33, the first side wall 31, and the second side wall 32. The bottom wall 35 is connected to the front wall 33, the first side wall 31, and the second side wall 32. The front wall 33, the first side wall 31, the second side wall 32, the top wall 34, the bottom wall 35, and the rear wall form an accommodating space, where the cell unit 10 and the elastic member 40 are disposed in the accommodating space.

Referring to FIGs. 1 to 5, insome embodiments, the housing 30 includes a front wall 33, a first side wall 31, a second side wall 32, a top wall 34, and a bottom wall 35. The front wall 33 and the elastic member 40 are arranged along the first direction X. The top wall 34 and the bottom wall 35 are arranged along the third direction Z. The first side wall 31 and the second side wall 32 are arranged along the second direction Y. The front wall 33 is connected to the first side wall 31 and the second side wall 32. The top wall 34 is connected to the front wall 33, the elastic member 40, the first side wall 31, and the second side wall 32. The bottom wall 35 is connected to the front wall 33, the elastic member 40, the first side wall 31, and the second side wall 32. The top wall 34, the bottom wall 35, the front wall 33, the elastic member 40, the first side wall 31, and the second side wall 32 form an accommodating space, where the cell unit 10 is disposed in the accommodating space. This is conducive to reducing a rear wall and simplifying an assembly process.

In an embodiment, the first extension portion 125 is connected to the top wall 34, and the first extension portion 125 is configured to be movable relative to the top wall 34. This can reduce the friction between the body portion 111 and the top wall 34 during movement, helping to move and protect the body portion 111, and reducing the risk of the influence of the damage of the body portion 111 on the use of the battery module.

Insome embodiments, the first extension portion 125 is in contact connection with the top wall 34.

Insome embodiments, a sliding member (not shown in the figure) is disposed between the first extension portion 125 and the top wall 34. The sliding member reduces a friction force between the first extension portion 125 and the top wall 34, facilitating the movement of the first extension portion 125 relative to the top wall 34.

In an embodiment, the second extension portion 126 is connected to the bottom wall 35, and the second extension portion 126 is configured to be movable relative to the bottom wall 35. This can reduce the friction between the body portion 111 and the bottom wall 35 during movement, helping to move and protect the body portion 111, and reducing the risk of the influence of the damage of the body portion 111 on the use of the battery module.

Insome embodiments, the second extension portion 126 is in contact connection with the bottom wall 35.

Insome embodiments, a sliding member (not shown in the figure) is disposed between the second extension portion 126 and the bottom wall 35. The sliding member reduces a friction force between the second extension portion 126 and the bottom wall 35, facilitating the movement of the second extension portion 126 relative to the bottom wall 35.

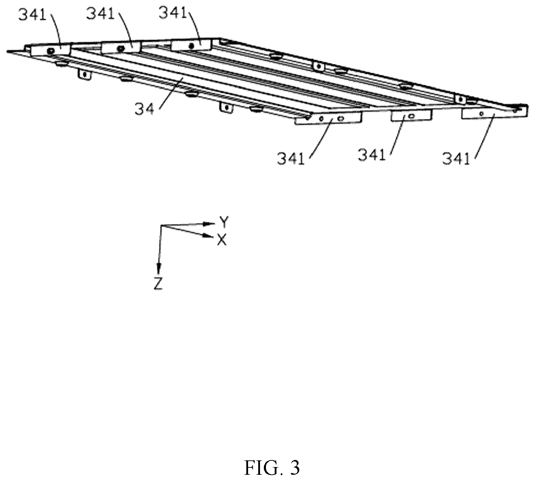

Referring to FIGs. 3 to 5 and 17 to 20, insome embodiments, the elastic member 40 is disposed between the front wall 33 and the cell unit 10, and the elastic member 40 is fixed to the top wall 34 and the bottom wall 35. The elastic member 40 can apply pressure to the cell unit 10 and contract based on the swelling of the cell unit 10 to provide a swelling space for the cell unit 10.

Insome embodiments, the elastic member 40 is disposed on a side of the cell unit 10 away from the front wall 33, and the elastic member 40 is fixed to the top wall 34 and the bottom wall 35. The housing 30 and the elastic member 40 form an accommodating space, where the cell unit 10 is disposed in the accommodating space. The elastic member 40 can apply pressure to the cell unit 10 and contract based on the swelling of the cell unit 10 to provide a swelling space for the cell unit 10.

Insome embodiments, the battery module 100 includes two elastic members 40, where one elastic member 40 is disposed between the front wall 33 and the cell unit 10, and along the first direction X, the elastic member 40 is fixed to one side of the top wall 34 and one side of the bottom wall 35. The other elastic member 40 is disposed on a side of the cell unit 10 away from the front wall 33, and along the first direction X, the other elastic member 40 is fixed to another side of the top wall 34 and another side of the bottom wall 35. The housing 30 and the other elastic member 40 form an accommodating space, where the cell unit 10 is disposed in the accommodating space. The two elastic members 40 can further apply pressure to the cell unit 10 and contract based on the swelling of the cell unit 10 to provide a swelling space for the cell unit 10, which is conducive to prolonging the service life of the battery module.

In another embodiment, a part of the elastic member 40 is fixed to the bottom wall 35, and another portion of the elastic member 40 is fixed to the first side wall 31 and the second side wall 32.

Insome embodiments, when the cell 11 does not swell, the elastic member 40 does not apply pressure to the cell unit 10. When the cell 11 swells, the cell 11 compresses the elastic member 40 such that the elastic member 40 applies pressure to the cell 11.

Insome embodiments, when the cell 11 does not swell, the elastic member 40 applies pressure to the cell 11. When the cell 11 swells, the cell 11 compresses the elastic member 40 such that the elastic member 40 applies a higher pressure to the cell 11.

In an embodiment, the elastic member 40 includes a base portion 41 and a folded portion 42, where the base portion 41 is connected to the folded portion 42, and the folded portion 42 is fixed to the housing 30. The elastic member 40 and the cell unit 10 are arranged in the first direction X. The base portion 41 is configured to be able to apply pressure to the cell unit 10. The folded portion 42 is configured to provide a swelling space for the cell unit 10.

Insome embodiments, the base portion 41 is connected to a body portion 111 of an outermost cell 11. The base portion 41 is provided with a plurality of bulges 411 spaced apart along the second direction Y, where the bulge 411 is formed by a side, recessed away from the body portion 111, of the base portion 41 facing the body portion 111. This can enhance the structural strength of the base portion 41 and reduce the risk of deformation of the base portion 41 caused by non-uniform stress on the base portion 41.

Insome embodiments, the folded portion 42 includes a first folded portion 421 and a second folded portion 422, where along the third direction Z, the first folded portion 421 and the second folded portion 422 are opposite to each other. The first folded portion 421 is connected to one side of the base portion 41. The second folded portion 422 is connected to another side of the base portion 41. The first folded portion 421 and the second folded portion 422 can act on the cell unit 10 through the base portion 41, and the first folded portion 421 and the second folded portion 422 can provide a swelling space for the cell unit 10.

In another embodiment, along the second direction Y, the first folded portion 421 and the second folded portion 422 are connected to two opposite sides of the base portion 41.

Insome embodiments, the elastic member 40 includes a first connection section 43, where the first connection section 43 is connected to a side of the first folded portion 421 facing away from the base portion 41, and the first connection section 43 is fixed to the top wall 34. The first folded portion 421 is fixed to the top wall 34 through the first connection section 43, so that an acting force on the folded portion 42 can be transferred to the housing 30.

Insome embodiments, the first connection section 43 is parallel to the base portion 41, which is conducive to deformation of the elastic member 40 in the first direction X.

Insome embodiments, the elastic member 40 includes a second connection section 44, where the second connection section 44 is connected to a side of the second folded portion 422 facing away from the base portion 41, and the second connection section 44 is fixed to the bottom wall 35. The second folded portion 422 is fixed to the bottom wall 35 through the second connection section 44, so that an acting force on the folded portion 42 can be transferred to the housing 30.

Insome embodiments, the second connection section 44 is parallel to the base portion 41, which is conducive to deformation of the elastic member 40 in the first direction X.

Insome embodiments, the top wall 34 is provided with a first fixed portion 341. Along the first direction X, a projection of the first connection section 43 overlaps a projection of the first fixed portion 341. The first connection section 43 is fixed to the first fixed portion 341, for example, fixed by welding, fixed by adhesion, fixed by abutment, fixed by clamping, or fixed by a screw. Optionally, the top wall 34 is provided with a plurality of first fixed portions 341, where the plurality of first fixed portions 341 are spaced apart along the second direction Y. The first connection section 43 is fixed to the plurality of first fixed portions 341, which can enhance the connection strength between the first connection section 43 and the top wall 34.

Insome embodiments, along the first direction X, two sides of the top wall 34 are each provided with the first fixed portion 341. The first connection section 43 is fixed to the first fixed portion 341.

Insome embodiments, the first fixed portion 341 is closer to the cell unit 10 than the first connection section 43, allowing for convenient fixation of the first fixed portion 341 to the first connection section 43.

Insome embodiments, the structural strength of the top wall 34 is higher than the structural strength of the elastic member 40, reducing the risk of deformation of the top wall 34 caused by the acting force on the first folded portion 421.

Insome embodiments, the top wall 34 is thicker than the thickest one of the base portion 41, the first folded portion 421, and the first connection section 43, which enhances the structural strength of the top wall 34 and reduces the risk of deformation of the top wall 34 caused by the acting force on the first folded portion 421.

Insome embodiments, the bottom wall 35 is provided with a second fixed portion 351. Along the first direction X, a projection of the second connection section 44 overlaps a projection of the second fixed portion 351. The second connection section 44 is fixed to the second fixed portion 351, for example, fixed by welding, fixed by adhesion, fixed by abutment, fixed by clamping, or fixed by a screw. Optionally, the bottom wall 35 is provided with a plurality of second fixed portions 351, where the plurality of second fixed portions 351 are spaced apart along the second direction Y. The second connection section 44 is fixed to the plurality of second fixed portions 351, which can enhance the connection strength between the second connection section 44 and the bottom wall 35.

Insome embodiments, along the first direction X, two sides of the bottom wall 35 are each provided with the second fixed portion 351. The second connection section 44 is fixed to the second fixed portion 351.

Insome embodiments, the second fixed portion 351 is closer to the cell unit 10 than the second connection section 44, allowing for convenient fixation of the second fixed portion 351 to the second connection section 44.

Insome embodiments, the structural strength of the bottom wall 35 is higher than the structural strength of the elastic member 40, reducing the risk of deformation of the top wall 34 caused by the acting force on the first folded portion 421.

Insome embodiments, the bottom wall 35 is thicker than the thickest one of the base portion 41, the second folded portion 422, and the second connection section 44, which enhances the structural strength of the bottom wall 35 and reduces the risk of deformation of the bottom wall 35 caused by the acting force on the second folded portion 422.

Insome embodiments, the first folded portion 421 includes a first folded section 421a and a second folded section 421b, where the first folded section 421a is connected to the base portion 41, and the second folded section 421b is connected to the first folded section 421a and the first connection section 43. A first included angle A₁ is formed between the first folded section 421a and the base portion 41, and a second included angle B₁ is formed between the second folded section 421b and the first connection section 43, where A₁ ≥ B₁. This is conducive to improving deformation resistance of the first folded section 421a and reducing the risk of deformation of the elastic member 40 in the first direction X.

Insome embodiments, a third included angle C₁ is formed between the first folded section 421a and the second folded section 421b, where C₁ > A₁. This is conducive to improving uniformity of deformation of the first folded portion 421.

Insome embodiments, C₁ = 2B₁ = 2A₁, which is conducive to further improving uniformity of deformation of the first folded portion 421.

Insome embodiments, the second folded portion 422 includes a third folded section 422a and a fourth folded section 422b, where the third folded section 422a is connected to the base portion 41, and the fourth folded section 422b is connected to the third folded section 422a and the second connection section 44. A first included angle A₂ is formed between the third folded section 422a and the base portion 41, a second included angle B₂ is formed between the fourth folded section 422b and the second connection section 44, and a third included angle C₂ is formed between the third folded section 422a and the fourth folded section 422b. A₂ ≥ B₂. This is conducive to improving deformation resistance of the third folded section 422a and reducing the risk of deformation of the elastic member 40 in the first direction X.

Insome embodiments, C₂ > A₂, which is conducive to improving uniformity of deformation of the second folded portion 422.

Insome embodiments, C₂ = 2B₂ = 2A₂, which is conducive to further improving uniformity of deformation of the second folded portion 422.

Insome embodiments, the first folded portion 421 and the second folded portion 422 are the same in structure, which is conducive to uniformity of stress and deformation. Optionally, the second folded portion 422 is disposed at a same angle as the first folded portion 421. When stressed, the first folded portion 421 and the second folded portion 422 can be stressed uniformly and deform uniformly, reducing the risk of rotation of the elastic member 40 caused by non-uniform deformation. Optionally, A₁ = A₂, B₁ = B₂, and C₁ = C₂.

Insome embodiments, the battery module 100 includes a first buffer member 150, where the first buffer member 150 is disposed between the elastic member 40 and the outermost cell 11, and the elastic member 40 and the first buffer member 150 are arranged along the first direction X. The first buffer member 150 is in contact connection with the base portion 41 and the body portion 111 of the outermost cell 11. When the cell 11 swells, the first buffer member 150 can be compressed to further provide a swelling space for the cell 11 and further apply pressure to the cell 11. Optionally, the first buffer member 150 includes foam.

Insome embodiments, the battery module 100 includes a second buffer member 160, where the second buffer member 160 is disposed between the other elastic member 40 and another outermost cell 11, and the second buffer member 160 and the elastic member 40 are arranged along the first direction X. The second buffer member 160 is in contact connection with the base portion 41 and the body portion 111 of the outermost cell 11. When the cell 11 swells, the second buffer member 160 can be compressed to further provide a swelling space for the cell 11 and further apply pressure to the cell 11. Optionally, the second buffer member 160 includes foam.

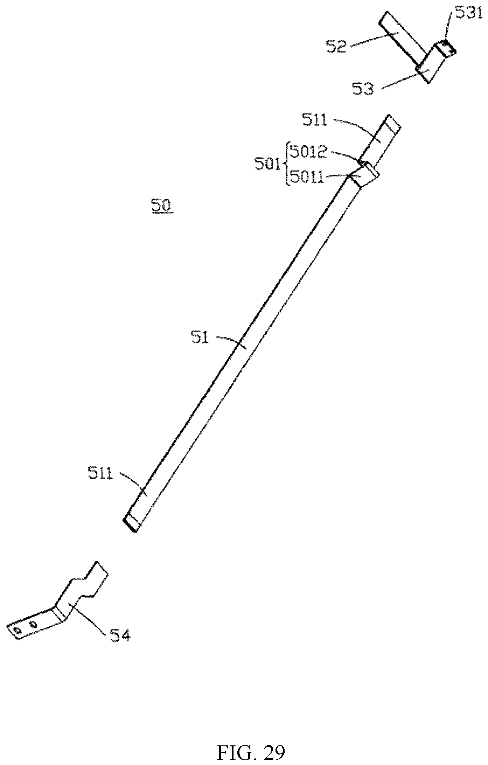

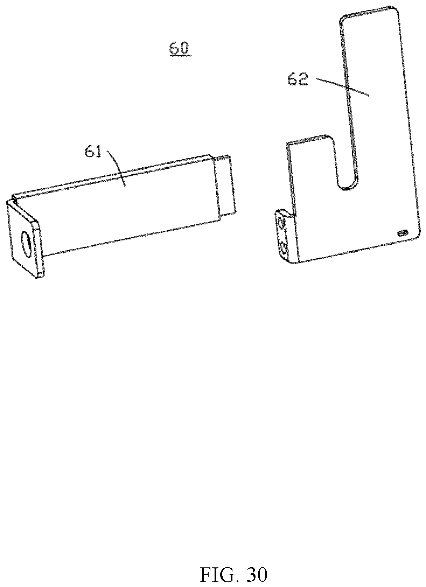

Referring to FIGs. 3, 5, 15, 24, 29, and 30, insome embodiments, the battery module 100 includes a first conductive member 50, where one end of the first conductive member 50 is fixed to the elastic member 40. The first conductive member 50 includes a buffer part 501, where the buffer part 501 is configured to be stretched along the first direction X by the elastic member 40 when the cell unit 10 swells, and the buffer part 501 can buffer pulling on the first conductive member 50 by the elastic member 40. This is conducive to the connection strength between the first conductive member 50 and the elastic member 40.

Insome embodiments, the first conductive member 50 is connected to the electrode terminal 11c. The cell unit 10 receives or outputs electrical energy via the first conductive member 50. When the cell unit 10 swells, the buffer part 501 can alleviate pulling on the electrode terminal 11c, which is conducive to protecting the electrode terminal 11c.

Insome embodiments, the buffer part 501 includes a first folded element 5011 and a second folded element 5012. The first folded element 5011 is connected to the second folded element 5012 to form a first folding included angle α, and when the buffer part 501 is stretched, the first folding included angle α gradually increases, reducing a stretching force applied to the buffer part 501, thereby facilitating stretching. Optionally, the buffer part 501 is a V-shaped structure.

Insome embodiments, the buffer part 501 includes a third folded element (not shown in the figure). The third folded element is connected to the first folded element 5011 and the second folded element 5012 to form a second folding included angle and a third folding included angle. When the buffer part 501 is stretched, the second folding included angle and the third folding included angle gradually increase, increasing a stretching length, thereby further buffering pulling on the first conductive member 50 and the electrode terminal 11c by the elastic member 40. Optionally, the buffer part 501 is a concave structure.

Insome embodiments, the first conductive member 50 includes a first conductive portion 51, a second conductive portion 52, and a third conductive portion 53. The buffer part 501 is disposed at the first conductive portion 51. The first conductive portion 51 is connected to the third conductive portion 53. The second conductive portion 52 is connected to the third conductive portion 53. The third conductive portion 53 is fixed to a base portion 41 of an elastic member 40 close to the second buffer member 160. The second conductive portion 52 is connected to an electrode terminal 11c of a cell 11 close to the second buffer member 160.

Insome embodiments, the first conductive portion 51 is more prone to folding than the second conductive portion 52. Optionally, the first conductive portion 51 includes a soft copper bar. Optionally, the soft copper bar is formed by stacking a plurality of thin copper bars, where the thin copper bar has a thickness less than 0.5 mm. Optionally, the second conductive portion 52 includes a hard copper bar. Optionally, the third conductive portion 53 includes a hard copper bar. Optionally, the hard copper bar is integrally formed. Insome embodiments, the second conductive portion 52 and the third conductive portion 53 are integrally formed. The first conductive portion 51 is more prone to folding, and the first conductive portion 51 is more prone to stretching when the cell 11 swells, which is conducive to movement of the cell unit 10.

Insome embodiments, the first conductive portion 51 and the second conductive portion 52 are connected by welding, for example, laser welding.

Insome embodiments, the third conductive portion 53 is provided with a third fixed portion 531, where the third fixed portion 531 is fixed to the base portion 41 of the elastic member 40 close to the second buffer member 160. Along the first direction X, a projection of the third fixed portion 531 is spaced apart from a projection of the cell housing 11a, so that the first conductive member 50 can be better stretched along the first direction X.

Insome embodiments, along the first direction X, a distance between the buffer part 501 and the elastic member 40 close to the second buffer member 160 is less than a distance between the buffer part 501 and an elastic member 40 close to the first buffer member 150, which is further conducive to stretching the buffer part 501.

Insome embodiments, the battery module 100 includes a connection terminal 170. The first conductive member 50 includes a fourth conductive portion 54. A side of the first conductive portion 51 facing away from the third conductive portion 53 is connected to the fourth conductive portion 54. The fourth conductive portion 54 is connected to the connection terminal 170. The cell unit 10 is connected to an external device through the connection terminal 170.

Insome embodiments, the first conductive portion 51 includes a straight portion 511. Along the first direction X, two ends of the buffer part 501 are connected to the straight portion 511. The bracket 12 further includes a fourth fixed portion 129, the fourth fixed portion 129 is connected to the first portion 121, the first portion 121 and the fourth fixed portion 129 are arranged along the second direction Y, and the straight portion 511 is fixed to the fourth fixed portion 129.

Insome embodiments, the fourth fixed portion 129 includes a first limiting protrusion 129a and a second limiting protrusion 129b apart from each other along the third direction Z. The straight portion 511 is disposed between the first limiting protrusion 129a and the second limiting protrusion 129b.

Insome embodiments, the battery module 100 includes a second conductive member 60. The second conductive member 60 has one end connected to an electrode terminal 11c of a cell 11 close to the first buffer member 150 and another end fixed to the connection terminal 170. The cell unit 10 receives or outputs electrical energy via the second conductive member 60. Optionally, the electrode terminal 11c connected to the first conductive member 50 and the electrode terminal 11c connected to the second conductive member 60 have opposite polarities.

Insome embodiments, along the third direction Z, the first conductive member 50 and the second conductive member 60 are located on a same side of the cell unit 10, facilitating spatial arrangement.

Insome embodiments, the second conductive member 60 includes a fifth conductive portion 61 and a sixth conductive portion 62, where the fifth conductive portion 61 has one end fixed to the connection terminal 170 and another end connected to the sixth conductive portion 62. The sixth conductive portion 62 is fixed to a base portion 41 of the elastic member 40 close to the first buffer member 150, and the sixth conductive portion 62 is connected to the electrode terminal 11c of the cell 11 close to the first buffer member 150.

Insome embodiments, the sixth conductive portion 62 is a hard copper bar, and the fifth conductive portion 61 is a soft copper bar, which is conducive to connection between the sixth conductive portion 62 and the electrode terminal 11c.

Insome embodiments, the sixth conductive portion 62 and the fifth conductive portion 61 are connected by welding, for example, laser welding.

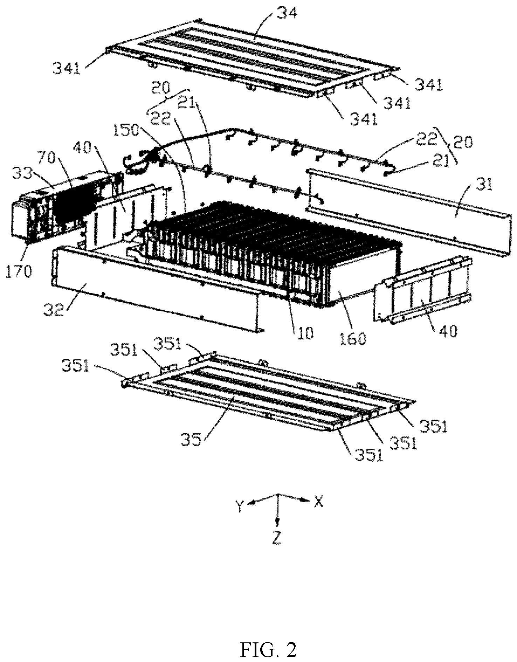

Referring to FIGs. 2 and 5, insome embodiments, the battery module 100 includes a circuit board 70, where the circuit board 70 is disposed between the front wall 33 and the elastic member 40. The circuit board 70 is connected to the wire 21 and can receive data collected by the sampling member 22. The circuit board 70 includes a BMS (Battery Management System) assembly. The BMS assembly includes a plurality of electronic components, and the plurality of electronic components can implement functions such as control, protection, communication, electrical quantity calculation, signal transmission, and electrical energy transmission for the cells 11. Optionally, the circuit board 70 includes a flexible circuit board (FPC, Flexible Printed Circuit). Optionally, the circuit board 70 includes a printed circuit board (PCB, Printed Circuit Board), and the circuit board 70 is provided with a plurality of wires (not shown in the figure).

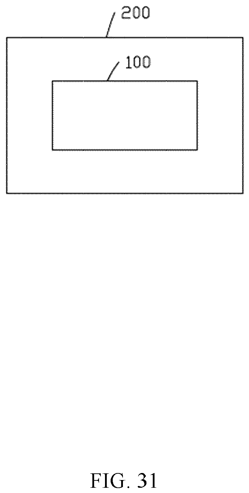

Referring to FIG. 31, this application further provides an electric device 200 using the foregoing battery module 100. In an embodiment, the electric device 200 in this application may be but is not limited to an electronic device, a drone, a backup power source, an electric vehicle, an electric motorcycle, an electric motor bicycle, an electric tool, and a large household battery module.

Those of ordinary skill in the art should appreciate that the foregoing some embodiments are for description of this application only but not for limiting this application. Appropriate modifications and variations made to the foregoing some embodiments without departing from the essential spirit and scope of this application all fall within the scope of this application.

## Claims

1. A battery module (100), comprising:
a plurality of cell units (10) arranged along a first direction (X), wherein each cell unit (10) comprises a cell (11) and a bracket (12); the cell comprising an electrode assembly (11b), a cell housing (11a), and an electrode terminal (11c); wherein the electrode terminal (11c) is connected to the electrode assembly (11b) and extends out of the cell housing (11a);
the cell housing (11a) comprises a body portion (111) and a first sealing portion (112), and the electrode assembly (11b) is disposed at the body portion (111);
the first sealing portion (112) comprises a first connection portion (112a), and the electrode terminal (11c) extends out of the cell housing (11a) from the first connection portion (112a);
the bracket (12) comprises a first portion (121), the first portion (121) covers a part of the first connection portion (112a), and the electrode terminal (11c) extends from the first portion (121); and
the battery module (100) further comprising a collection assembly (20); the collection assembly (20) comprising a wire (21) and a plurality of sampling members (22), wherein the wire (21) is connected to each of the sampling members (22); wherein
at least one bracket (12) comprises a second portion (122), the second portion (122) is connected to the first portion (121) of the at least one bracket (12);
at least one electrode terminal (11c) is disposed at the second portion (122), one of the sampling members (22) is connected to the electrode terminal (11c), and the sampling member (22) is fixed to the second portion (122).

2. The battery module (100) according to claim 1, wherein the second portion (122) comprises a first side surface (122a) and a second side surface (122b), the second side surface (122b) and the first side surface (122a) are opposite to each other along a second direction (Y); the sampling member (22) is connected to the second side surface (122b), the electrode terminal (11c) is connected to the first side surface (122a), the electrode terminal (11c) is disposed between the sampling member (22) and the first side surface (122a), and the second direction (Y) is perpendicular to the first direction (X).

3. The battery module (100) according to claim 2, wherein the second portion (122) and the first portion (121) are arranged along the first direction (X); and along a direction opposite to the first direction (X), the second portion (122) extends from the first portion (121).

4. The battery module (100) according to claim 3, wherein the plurality of cell units (10) comprise a first cell unit (101) and a second cell unit (102) adjacent to each other along the first direction (X), an electrode terminal (11c) of the first cell unit (101) and an electrode terminal (11c) of the second cell unit (102) are connected in a folding manner, a second portion (122) of the first cell unit (101) faces a second portion (122) of the second cell unit (102), and the second portion (122) of the second cell unit (102) faces the second portion (122) of the first cell unit (101).

5. The battery module (100) according to claim 4, wherein along the first direction (X), a first space (10c) is provided between a bracket (12) of the first cell unit (101) and a bracket (12) of the second cell unit (102);
and along the second direction (Y), a projection of the second portion (122) of the first cell unit (101) is located in a projection of the first space(10c), and a projection of the second portion (122) of the second cell unit (102) is located in the projection of the first space(10c).

6. The battery module (100) according to claim 4 or 5, wherein the plurality of cell units (10) further comprise a third cell unit (103), the second cell unit (102) and the third cell unit (103) are arranged adjacent to each other along the first direction (X), a second portion (122) of the third cell unit (103) is facing away from a first portion (121) of the second cell unit (102), and an electrode terminal (11c) of the third cell unit (103) is connected in a folding manner to the electrode terminal (11c) of the first cell unit (101) and/or the electrode terminal (11c) of the second cell unit (102).

7. The battery module (100) according to claim 6, wherein along the second direction (Y), the electrode terminal (11c) of the first cell unit (101), the electrode terminal (11c) of the second cell unit (102), and the electrode terminal (11c) of the third cell unit (103) are stacked to form a first stack portion (10d);
and along the second direction (Y), a projection of the first stack portion (10d) is located between a projection of the second portion (122) of the second cell unit (102) and a projection of the second portion (122) of the third cell unit (103).

8. The battery module (100) according to claim 7, wherein along the second direction (Y), the projection of the first stack portion (10d) is located between a projection of the first portion (121) of the second cell unit (102) and a projection of a first portion (121) of the third cell unit (103).

9. The battery module (100) according to claim 7 or 8, wherein along the first direction (X), a second space (10e) is provided between a bracket (12) of the third cell unit (103) and the bracket (12) of the second cell unit (102);
and along the second direction (Y), the projection of the first stack portion (10d) is located in a projection of the second space (10e).

10. The battery module (100) according to any one of claims 7 to 9, wherein the plurality of cell units (10) further comprise a fourth cell unit (104), the third cell unit (103) and the fourth cell unit (104) are arranged adjacent to each other along the first direction (X), the second portion (122) of the third cell unit (103) faces a second portion (122) of the fourth cell unit (104), and the second portion (122) of the fourth cell unit (104) faces the second portion (122) of the third cell unit (103).

11. The battery module (100) according to any one of claims 2 to 10, wherein at least one of the first side surface (122a) or the second side surface (122b) is provided with a step portion (122c), the step portion (122c) comprising a first step surface (1221) and a second step surface (1222); wherein along the second direction (Y), a thickness of the first step surface (1221) is less than a thickness of the second step surface (1222),
and along the second direction (Y), a projection of the electrode terminal (11c) overlaps a projection of the first step surface (1221), the projection of the electrode terminal (11c) is spaced apart from a projection of the second step surface (1222), and the sampling member (22) is connected to the step portion (122c).

12. The battery module (100) according to claim 11, wherein the sampling member (22) comprises a first part (221) and a second part (222); and along the second direction (Y), the first part (221) and the second portion (122) are connected, and the second part (222) is connected to a second portion (122) of any one of the plurality of cell units (10) and an electrode terminal (11c) disposed at the second portion (122).

13. The battery module (100) according to claim 12 wherein the first part (221) comprises a first section (221a), the second part (222) comprises a second section (222a), the first section (221a) is bent toward the second section (222a), and the first section (221a) is connected to the first step surface (1221) located on the second side surface (122b).

14. The battery module (100) according to claim 13, wherein the second section (222a) is bent toward the first section (221a), and the second section (222a) is connected to the first step surface (1221) located on the first side surface (122a).

15. An electric device, comprising the battery module (100) according to any one of claims 1 to 14.
